# FASCICULE DE BREVET EUROPEEN

(11) **EP 3 464 181 B1**
(45) Date de publication et mention de la délivrance du brevet: **24.03.2021**
(21) Numéro de dépôt: 17725244.2
(22) Date de dépôt: 23.05.2017
(51) Int. Cl.: C01D 15/04, B01J 20/08, C01F 7/04

(54) **PROCEDE DE PREPARATION D'UN MATERIAU ADSORBANT ET PROCEDE D'EXTRACTION DE LITHIUM UTILISANT LEDIT MATERIAU**
VERFAHREN ZUR HERSTELLUNG EINES ADSORBIERENDEN MATERIALS UND VERFAHREN ZUR EXTRAKTION VON LITHIUM UNTER VERWENDUNG DES BESAGTEN MATERIALS
PROCESS FOR PREPARING AN ADSORBENT MATERIAL AND PROCESS FOR EXTRACTING LITHIUM USING SAID MATERIAL

(30) Priorité: 25.05.2016 FR 1654703
(43) Date de publication de la demande: 10.04.2019
(73) Titulaire: Eramet, 75015 Paris (FR); IFP Energies nouvelles, 92852 Rueil-Malmaison (FR)
(72) Inventeur: BOUALLEG, Malika, 69100 VILLEURBANNE (FR); BURDET, Fabien, 78370 PLAISIR (FR); OUDART, Yohan, Florent, 78000 VERSAILLES (FR)
(74) Mandataire: Lavoix
(86) Numéro de dépôt international: PCT/EP2017/062371
(87) Numéro de publication internationale: WO 2017/202825

(56) Documents cités:
- EP-A1- 0 103 034
- WO-A1-2015/097205
- WO-A1-2016/193439
- MOSHE FRENKEL ET AL: "Crystal modification of freshly precipitated aluminum hydroxide by lithium ion intercalation", JOURNAL OF PHYSICAL CHEMISTRY, vol. 84, no. 5, 1 mars 1980 (1980-03-01), pages 507-510, XP055330270, US ISSN: 0022-3654, DOI: 10.1021/j100442a010
- Patrick Euzen ET AL: "Alumina" In: "Handbook of Porous solids", 25 avril 2008 (2008-04-25), Wiley-VCH Verlag GmbH, XP055057945, ISBN: 978-3-52-761828-6 pages 1591-1677, DOI: 10.1002/9783527618286,

## Description

### Domaine technique

La présente invention se rapporte au domaine des matériaux solides pour l'adsorption du lithium. En particulier, la présente invention se rapporte à un nouveau procédé de préparation d'un matériau solide cristallisé et mis en forme, de préférence sous forme d'extrudés, de formule (LiCl)ₓ.2Al(OH)₃,nH₂O avec n étant compris entre 0,01 et 10, x étant compris entre 0,4 et 1, comprenant une étape a) de précipitation de boehmite dans des conditions de température et de pH spécifiques, une étape de mise en contact avec du chlorure de lithium en quantité sous stœchiométrique, au moins une étape de mise en forme, de préférence par extrusion, l'ensemble des caractéristiques du procédé permettant d'augmenter la capacité d'adsorption du lithium ainsi que la cinétique d'adsorption des matériaux obtenus par rapport aux matériaux de l'art antérieur lorsque celui-ci est utilisé dans un procédé d'extraction du lithium de solutions salines et permettant d'utiliser une quantité plus faible de chlorure de lithium par rapport aux procédés de l'art antérieur ce que qui permet d'améliorer le coût de production du solide et de diminuer la quantité de lithium perdue dans les effluents.

La présente invention se rapporte également à un procédé d'extraction du lithium à partir de solutions salines utilisant ledit matériau solide cristallisé de formule (LiCl)ₓ.2Al(OH)₃,nH₂O avec n et x ayant la définition précitée préparé selon le nouveau procédé de préparation selon l'invention.

### Art antérieur

Les ions lithium coexistent avec des quantités massives de métaux tels que par exemple les alcalins, les alcalino-terreux, le bore et les sulfates, en particulier dans des solutions salines telles que les saumures. Ainsi, ils doivent faire l'objet d'une extraction économique et sélective à partir de ces solutions salines. En effet, les propriétés chimiques du lithium et des métaux alcalins, de préférence le sodium (Na), et le potassium (K) et des alcalino-terreux, de préférence le magnésium (Mg), le calcium (Ca) et le strontium (Sr), rendent difficile la séparation de ces éléments.

Les matériaux solides de formule LiCl.2Al(OH)₃,nH₂O avec n étant compris entre 0,01 et 10 sont connus pour leur utilisation dans les phénomènes d'adsorption/désorption des ions lithium et en particulier dans les procédés d'extraction du lithium à partir de solutions salines. Ces structures peu stables permettraient l'intercalation d'atomes de lithium dans la structure et ainsi l'extraction du lithium.

Plusieurs protocoles opératoires conduisant à des solides susceptibles d'adsorber sélectivement le lithium ont été mis en évidence dans l'art antérieur. Dans tous les cas, un solide trihydroxyde d'aluminium Al(OH)₃, préparé ou commercial, est mis en contact avec un précurseur de lithium. Trois principaux précurseurs sont utilisés : le plus utilisé est le chlorure de lithium (LiCl). Un hydroxyde d'aluminium (LiOH) ou un carbonate de lithium (Li₂CO₃) peuvent également être mis en œuvre.

Le brevet US 6 280 693 décrit un procédé de préparation d'un solide LiCl/Al(OH)₃ par ajout d'une solution aqueuse de LiOH à une alumine hydratée polycristalline pour former du LiOH/Al(OH)₃, et ainsi créer des sites de lithium actifs dans les couches cristallines de l'alumine sans en altérer la structure. La transformation de LiOH/Al(OH)₃ en LiCl/Al(OH)₃ est ensuite réalisée par ajout d'acide chlorhydrique dilué. Les pastilles d'alumine ainsi préparées sont ensuite utilisées dans un procédé d'extraction du lithium à partir de saumures à haute température. Le procédé d'extraction du lithium décrit dans le brevet US 6 280 693 utilise le solide détaillé ci-dessus et comprend les étapes ci-après :
a) Saturation d'un lit de solide par une saumure contenant un sel de lithium LiX, X étant choisi parmi les halogénures, les nitrates, les sulfates et les bicarbonates,
b) Déplacement de la saumure imprégnée par une solution concentrée NaX,
c) Élution du sel LiX capté par le solide par passage d'une solution non saturée de LiX,
d) Déplacement de l'imprégnant par une solution concentrée de NaX, les étapes a) à d) sont ensuite répétées au moins une fois.

Le brevet RU 2 234 367 décrit un procédé de préparation d'un solide de formule LiCl.2Al(OH)₃,nH₂O comprenant une étape de mélange de trichlorure d'aluminium (AlCl₃) et de carbonate de lithium (Li₂CO₃) en présence d'eau à 40°C. Le résidu obtenu est filtré et lavé puis séché pendant 4 heures à 60°C. Le solide ainsi obtenu n'est pas mis en forme.

Le solide obtenu est utilisé pour l'extraction du lithium contenu dans des solutions salines par mise en contact avec de l'eau afin d'éliminer une partie du lithium puis par mise en contact avec une solution saline contenant du lithium. La capacité statique ainsi obtenue est comprise entre 6,0 et 8,0 mg de lithium par g de solide.

Le brevet CN1243112 décrit un procédé de préparation d'un solide de formule LiCl.2Al(OH)₃,nH₂O comprenant une étape de précipitation de microcristaux d'hydroxyde d'aluminium Al(OH)₃ par mise en contact d'AlCl₃ et d'hydroxyde de sodium NaOH, puis la mise en contact desdits microcristaux avec une solution à 6% de chlorure de lithium LiCl à 80°C pendant 2 heures suivie d'une filtration, d'un rinçage et d'un séchage pour obtenir une poudre de LiCl.2Al(OH)₃,nH₂O doté d'une structure non ordonnée et amorphe. Une solution d'un polymère macromoléculaire choisie parmi les résines fluorées, le chlorure de polyvinyle (PVC), le chlorure de polyvinyle chloré (CPVC), le perchlorate d'éthylène et l'acétate-butyrates de cellulose (CAB) faisant office de liant est ensuite mélangée à la poudre de LiCl.2Al(OH)₃,nH₂O pour obtenir une pâte qui est ensuite mise en forme par granulation suivie d'un séchage à l'air.

L'utilisation d'un tel solide dans un procédé d'extraction du lithium des saumures de lacs salés permet d'obtenir un faible rapport Mg/Li et une liqueur mère riche en lithium et conforme aux normes de production de carbonates ou de chlorures de lithium.

La demande internationale WO 2015/097205, déposée par ERAMET et l'IFP ENERGIES NOUVELLES, décrit un procédé de préparation d'un matériau solide cristallisé de formule LiCl.2Al(OH)₃,nH₂O avec n étant compris entre 0,01 et 10. WO 2015/097205 décrit aussi un procédé d'extraction du lithium à partir de solutions salines utilisant le matériau ainsi préparé. Le procédé de préparation du matériau LiCl.2Al(OH)₃,nH₂O comprend une étape de mise en contact d'une source de Lithium avec une source d'aluminium réalisée à 40°C sans préciser le pH de fin de précipitation (selon les exemples).

Un objectif de la présente invention est de fournir un matériau solide permettant l'extraction sélective de lithium à partir de saumure, ledit matériau solide étant de bonne qualité, sans défaut apparent et présentant une bonne cohésion et une bonne tenue mécanique lorsque celui-ci est mis au contact d'une solution saumure ou dans l'eau.

Un objectif de la présente invention est de fournir un nouveau procédé de préparation d'un tel matériau solide.

Un autre objectif de la présente invention est de fournir un procédé d'extraction du lithium de solutions salines utilisant un matériau solide.

Un autre objectif de la présente invention est de fournir un matériau solide pour la mise en œuvre d'un procédé d'extraction de lithium de solutions salines, dans lequel le matériau solide permet de limiter la génération de particules fines notamment car les particules fines augmentent la perte de charge, favorise la création de chemins préférentiels et augmentent le taux de renouvellement du matériau lors du passage de la saumure au travers d'un lit d'un matériau au sein d'une colonne.

Les demandeurs ont découvert un nouveau procédé de préparation d'un matériau solide cristallisé de formule (LiCl)ₓ.2Al(OH)₃,nH₂O avec n étant compris entre 0,01 et 10, x étant compris entre 0,4 et 1, comprenant une combinaison d'étapes spécifiques et en particulier que le fait de réaliser à la fois l'étape a) de précipitation de boehmite dans des conditions de température et de pH spécifiques, l'étape de mise en contact avec LiCl en faible quantité, suivie de la mise en forme d'une pâte, de préférence par extrusion, permet d'obtenir un matériau solide cristallisé de formule (LiCl)ₓ.2Al(OH)₃,nH₂O sans défaut apparent présentant à la fois, une bonne cohésion, une bonne tenue mécanique du matériau lorsque celui-ci est mis au contact d'une solution saumure ou dans l'eau et présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Sans être lié à une quelconque théorie, les demandeurs ont mis en évidence que la mise en œuvre de l'étape a) de précipitation dans les conditions opératoires de températures et de pH telles que définies selon l'invention permet l'obtention d'un précipité de boehmite composée de cristallites de faible taille. En particulier, le précipité de boehmite obtenu présente une taille, obtenue par la formule de Scherrer en diffraction des rayons X selon les directions cristallographiques [020] et [120], respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 nm et entre 0,5 et 2,5 nm.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

Le procédé selon l'invention comprenant une étape a) de précipitation selon l'invention permet ainsi l'obtention d'un matériau final solide cristallisé de formule (LiCl)ₓ.2Al(OH)₃,nH₂O, avec n étant compris entre 0,01 et 10, x ayant la définition précitée, également peu cristallisé mais présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

### Résumé et intérêt de l'invention

On entend de préférence par « matériau de formule (LiCl)ₓ.2Al(OH)₃,nH₂O» un matériau comprenant essentiellement ou consistant d'une phase cristallisée de formule (LiCl)ₓ.2Al(OH)₃,nH₂O, avec n et x ayant la définition précitée.

La présente invention a pour objet un procédé de préparation d'un matériau solide cristallisé de formule (LiCl)ₓ.2Al(OH)₃,nH₂O avec n étant compris entre 0,01 et 10, x étant compris entre 0,4 et 1, ledit procédé comprenant au moins les étapes suivantes :
a) une étape de précipitation de boehmite, en milieu aqueux, comprenant la mise en contact d'au moins un précurseur basique de préférence choisi parmi l'aluminate de sodium, l'aluminate de potassium, l'ammoniaque, l'hydroxyde de sodium, l'hydroxyde de potassium et l'un quelconque de leurs mélanges ; et d'au moins un précurseur acide de préférence choisi parmi le chlorure d'aluminium, l'acide chlorhydrique et l'un quelconque de leurs mélanges, dans laquelle au moins l'un des précurseurs basique ou acide comprend de l'aluminium, pour obtenir une suspension de boehmite, ladite étape a) étant mise en œuvre à une température comprise entre 5 et 35°C, et la quantité du précurseur basique étant choisie de manière à obtenir un pH de fin de précipitation dans le milieu réactionnel compris entre 7,5 et 9,5,
b) une étape de lavage et de filtration du précipité de boehmite obtenu à l'étape a),
c) une étape de mise en contact du précipité obtenu à l'étape b) avec une quantité de chlorure de lithium équivalent à un ratio molaire Li/Al compris entre 0,3 et 1,2 de préférence pendant une durée comprise entre 10 minutes et 12 heures,
d) une étape de filtration de la suspension obtenue à l'étape c) pour obtenir une pâte,
e) une étape de séchage de la pâte obtenue à l'issue de l'étape d) à une température comprise entre 20 et 80°C de préférence pendant une durée comprise entre 1h et 12h,
f) une étape de mise en forme de ladite pâte séchée,
g) une étape de séchage du matériau mis en forme obtenu à l'issue de l'étape f) à une température comprise entre 20 et 200°C, de préférence pendant une durée comprise entre 1 et 20 heures.

Un avantage du procédé de préparation selon l'invention est de permettre l'obtention d'un matériau solide cristallisé mis en forme, de préférence sous forme d'extrudés, de formule (LiCl)ₓ.2Al(OH)₃,nH₂O avec n et x ayant la définition précitée, de bonne qualité, sans défaut apparent, et présentant une bonne cohésion ainsi qu'une tenue mécanique améliorée lorsque celui-ci est mis au contact d'une solution saumure ou d'une solution diluée et de préférence dans l'eau.

Un autre avantage de la présente invention est de fournir un procédé de préparation d'un matériau solide cristallisé mis en forme, de préférence sous forme d'extrudés, de formule (LiCl)ₓ.2Al(OH)₃,nH₂O avec n et x ayant la définition précitée, présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Un autre avantage de la présente invention réside dans l'utilisation d'une quantité plus faible de chlorure de lithium par rapport aux procédés de l'art antérieur ce qui permet d'améliorer le coût de production du solide et de diminuer la quantité de lithium perdue dans les effluents.

La capacité d'adsorption du matériau précitée est définie par la quantité de lithium adsorbé, pour une solution donnée. Elle est calculée par l'homme du métier en intégrant la quantité de lithium fixée à partir d'une courbe de perçage dite aussi courbe de fuite ou courbe de saturation. L'intégration est réalisée sur le volume par la différence de concentration en lithium entre une solution après son chargement sur le matériau précité et la concentration théorique sans chargement. Cette quantité de matière peut être rapportée à la quantité de matériau utilisée pour obtenir une capacité en milligrammes de lithium par gramme de solide.

La cinétique d'adsorption du matériau précité est mesurée par l'homme du métier en étudiant la forme d'une courbe de perçage dite aussi courbe de fuite ou courbe de saturation. Cette courbe est obtenue au moyen d'une colonne remplie avec le matériau adsorbant pour former un lit homogène, en faisant percoler une solution saline contenant du lithium et en mesurant la concentration en lithium à la sortie du lit d'adsorbant en fonction du volume de solution utilisé pour un débit donné.

Par capacité d'adsorption améliorée par rapport aux matériaux de l'art antérieur, on entend une capacité d'adsorption supérieure à 6 mg de Li/g de matériau solide sec.

On entend par matériau solide sec, un matériau solide séché à 200 °C de préférence pendant 12 heures.

Par « mis en forme », on entend que le matériau est solide et présente une cohésion suffisante lorsque le solide est mis au contact d'une solution de saumure pour qu'il ne perde sensiblement pas son intégrité physique, c'est-à-dire qu'il conserve sensiblement sa mise en forme. Plus précisément, un solide mis en forme au sens de l'invention couvre un solide conservant sa cohésion dans les conditions d'extraction de lithium définies dans les exemples.

La cohésion ainsi que la résistance mécanique du matériau mis en forme, de préférence par extrusion, préparé selon l'invention sont testées lors de la réalisation des courbes de perçage dites aussi courbes de fuite ou courbes de saturation. Un solide présentant une bonne résistance mécanique ne produit peu ou pas de fines particules et permet d'opérer la colonne sans observation de colmatage. Un solide présentant une mauvaise résistance mécanique produit des fines particules qui induisent un colmatage rapide de la colonne.

La cohésion ainsi que la résistance mécanique du matériau mis en forme, de préférence par extrusion, préparés selon l'invention sont aussi testées par l'intermédiaire d'un protocole de vieillissement accéléré sur table d'agitation, soit dans une saumure, soit dans l'eau.

La table d'agitation est animée d'un mouvement unidirectionnel horizontal d'amplitude 4 cm à une vitesse de 190 mouvements par minute. Les solides mis en forme sont ainsi agités pendant une durée totale de 168h.

A l'issue de ces 168h, le mélange solide mis en forme-saumure ou eau est tamisé à l'aide d'une grille de maille 315 µm. Puis les solides mis en forme restant sur le tamis sont lavés avec le milieu utilisé pendant l'agitation. La fraction liquide ainsi obtenue, contenant de fines particules solides (diamètre inférieur à 315 µm) en suspension, est filtrée à l'aide d'un Büchner équipé d'un papier filtre dont les pores ont une dimension de 0,45 µm. Le gâteau formé par l'agglomération des fines particules est lavé avec de l'eau déminéralisée. Le résidu solide ainsi obtenu est séché en étuve à 50°C jusqu'à stabilisation de la masse.

Le rapport de la masse de résidu solide sur la masse de solides mis en forme initiale est alors calculé, donnant accès à un pourcentage de destruction des solides mis en forme.

Le pourcentage de destruction des matériaux préparés selon l'invention permet d'apprécier la cohésion desdits matériaux.

Une bonne cohésion est notamment obtenue pour les matériaux dont le pourcentage de destruction est inférieur à 60%, et de préférence inférieur à 50%, lorsque ceux-ci sont mis au contact d'une solution de saumure ou de toute autre solution aqueuse diluée et en particulier de l'eau.

Les matériaux préparés selon l'invention présentent par ailleurs une tenue mécanique améliorée par rapport aux matériaux de l'art antérieur.

Par « tenue mécanique améliorée », on entend que les matériaux préparés selon l'invention présentent un pourcentage de destruction, lorsqu'ils sont mis au contact d'une solution de saumure ou de toute autre solution aqueuse diluée et en particulier de l'eau, inférieur à 30% et de préférence inférieur à 20%.

Un autre avantage du procédé de préparation selon l'invention est de permettre l'obtention d'un matériau solide cristallisé mis en forme, de préférence sous forme d'extrudés, de formule (LiCl)ₓ.2Al(OH)₃,nH₂O avec n et x ayant la définition précitée présentant pas ou peu de fissures qui pourraient provoquer un gonflement néfaste à la cohésion et à la tenue mécanique du matériau lorsque celui-ci est mis au contact d'une solution saumure ou d'une solution diluée et de préférence dans l'eau.

La présente invention a également pour objet un procédé d'extraction du lithium de solutions salines utilisant ledit matériau solide cristallisé mis en forme de formule (LiCl)ₓ.2Al(OH)₃,nH₂O avec n étant compris entre 0,01 et 10, x étant compris entre 0,4 et 1, préparé selon le nouveau procédé de préparation selon l'invention. L'augmentation de capacité du matériau par rapport au matériau de l'art antérieur permet d'utiliser moins de matériau pour extraire la même quantité de lithium dans une saumure.

Un avantage du procédé d'extraction selon l'invention est de permettre l'extraction sélective du lithium à partir d'une solution saline et d'obtenir ainsi un facteur d'épuration élevé par rapport à la solution saline initiale, calculé comme étant le rapport X/Li qui est égal au rapport molaire de concentrations X/Li dans la solution saline initiale divisé par le rapport molaire de concentrations X/Li dans la solution finale, X étant choisi parmi le sodium (Na), le potassium (K), le magnésium (Mg), le calcium (Ca), le bore (B), le soufre (S) et le strontium (Sr). La présente invention a également pour objet un matériau solide cristallisé de formule (LiCl)ₓ.2Al(OH)₃,nH₂O avec n étant compris entre 0,01 et 10, x étant compris entre 0,4 et 1, de préférence sous forme d'extrudés, susceptible d'être obtenu selon un procédé de l'invention.

La présente invention a également pour objet un dispositif d'extraction de lithium de solution(s) saline(s) comprenant au moins une colonne, ladite colonne comprenant au moins une garniture comprenant le matériau solide cristallisé tel que défini selon l'invention. Le dispositif selon l'invention met ainsi en œuvre le procédé d'extraction selon l'invention.

### Description de l'invention

Conformément à l'invention, le procédé comprend une étape a) de précipitation de la boehmite, en milieu réactionnel aqueux, ladite étape comprenant la mise en contact d'au moins un précurseur basique de préférence choisi parmi l'aluminate de sodium, l'aluminate de potassium, l'ammoniaque, l'hydroxyde de sodium, l'hydroxyde de potassium et l'un quelconque de leurs mélanges ; et d'au moins un précurseur acide, le trichlorure d'aluminium (AlCl₃), l'acide chlorhydrique et l'un quelconque de leurs mélanges, dans laquelle au moins l'un des précurseurs basique ou acide comprend de l'aluminium, pour obtenir une suspension de boehmite, ladite étape a) étant mise en œuvre à une température comprise entre 5 et 35°C, et la quantité du précurseur basique étant choisie de manière à obtenir un pH de fin de précipitation dans le milieu réactionnel compris entre 7,5 et 9,5.

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

De préférence, le précurseur basique est l'hydroxyde de sodium (NaOH).

De préférence, le ou les précurseur(s) basique(s) et acide(s) sont ajoutés dans ladite première étape de précipitation a) en solutions aqueuse.

De préférence, le milieu réactionnel aqueux est de l'eau.

De préférence, ladite étape a) est mise en œuvre sous agitation.

De préférence, ladite étape a) de précipitation de la boehmite est mise en œuvre à une température comprise entre 5 et 30°C, et de manière préférée entre 10 et 30°C et de manière très préférée entre 10 et 25°C, et la quantité du précurseur basique étant choisie de manière à obtenir un pH de fin de précipitation dans le milieu réactionnel compris entre 7,5 et 9 et de manière préférée entre 7,7 et 8,8.

De préférence l'étape a) de précipitation est mise en œuvre pendant une durée comprise entre 10 minutes et 5 heures, de préférence entre 15 minutes et 2 heures.

Ladite étape a) de précipitation permet l'obtention d'une suspension de boehmite précipitée.

La mise en œuvre de l'étape a) de précipitation dans les conditions opératoires de températures et de pH telles que définies permet l'obtention d'un précipité de boehmite présentant des cristallites de faible taille. On entend par cristallites de faible taille, un précipité de boehmite composée de cristallites dont la taille, obtenue par la formule de Scherrer en diffraction des rayons X selon les directions cristallographiques [020] et [120], est respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 nm et entre 0,5 et 2,5 nm.

Conformément à l'invention, le procédé comprend une étape b) de lavage et de filtration du précipité de boehmite obtenu à l'issue de l'étape a).

De préférence ladite étape de lavage est une étape de lavage à l'eau.

Conformément à l'invention, le procédé comprend une étape de mise en contact du précipité obtenu à l'étape b) avec une quantité de chlorure de lithium équivalent à un ratio molaire Li/Al compris entre 0,3 et 1,2 et de préférence compris entre 0,4 et 1, de préférence pendant une durée comprise entre 10 minutes et 12 heures.

De préférence, le précipité de boehmite obtenu à l'étape b) et le chlorure de lithium sont mélangées en présence d'eau pour obtenir une suspension dans l'étape c). De préférence, ladite étape c) de mélange est mise en œuvre sous agitation vigoureuse.

De préférence, ladite étape c) de mise en contact est réalisée à une température comprise entre 20 et 95° C et de préférence comprise entre 50 et 95°C et de manière préférée entre 70 et 95°C.

De préférence, l'étape c) de mise en contact est réalisée pendant une durée comprise entre 15 minutes et 12 heures et de préférence entre 15 minutes et 5 heures.

Conformément à l'invention, la suspension obtenue à l'issue de l'étape c) subit une étape d) de filtration pour obtenir une pâte.

Conformément à l'invention, la pâte obtenue à l'issue de l'étape d) est séchée dans une étape e) de séchage de préférence à une température comprise entre 20 et 80°C, de préférence pendant une durée comprise entre 1h et 12 h.

De préférence, ladite étape de séchage est mise en œuvre, de manière préférée en étuve ou en four, à une température comprise entre 20 et 60°C et de manière très préférée entre 30 et 50°C, de préférence pendant une durée comprise entre 1h et 10 h.

Les conditions opératoires de ladite étape e) de séchage permettent l'obtention d'une pâte séchée présentant une perte au feu (PAF) comprise entre 45 et 75% et de préférence entre 50 et 70%. La perte au feu obtenue permet la mise en forme, de préférence par extrusion, de la pâte séchée dans de bonnes conditions et l'obtention de matériaux mis en forme, de préférence sous forme d'extrudés, résistants et sans défaut apparent, c'est à dire sans fissure.

De manière à déterminer la PAF avant l'étape de mise en forme, une partie de la pâte obtenue est prélevée et mise à l'étuve pendant 6 h à 200°C. La PAF est obtenue par différence entre la masse de l'échantillon avant et après passage à l'étuve.

Conformément à l'invention, ladite pâte séchée obtenue à l'issue de l'étape e) de séchage subit, une étape f) de mise en forme.

De préférence, ladite étape f) de mise en forme est réalisée selon les méthodes connues de l'Homme du métier, telles que par exemple par extrusion, par pastillage, par la méthode de la coagulation en goutte (oil-drop), par granulation au plateau tournant.

De manière préférée, ladite étape f) de mise en forme est réalisée par extrusion. De manière très préférée, ladite étape f) est réalisée par extrusion directe ou par malaxage-extrusion.

On entend par mise en forme directe de la pâte séchée issue de l'étape e), une étape dans laquelle ladite pâte séchée ne subit pas d'étapes intermédiaires entre l'étape e) de séchage et son introduction dans l'extrudeuse et en particulier aucune étape de malaxage.

On entend par étape de malaxage - extrusion, une étape dans laquelle la pâte séchée obtenue à l'issue de l'étape e) de séchage subit dans une première étape de malaxage, en présence ou non d'au moins un liant ou composé précurseur de liant, puis la pâte est ensuite soumise à une étape d'extrusion.

Ladite étape e) de mise en forme par malaxage - extrusion est avantageusement réalisée de manière connue de l'Homme du métier.

De préférence, ladite pâte séchée obtenue à l'issue de l'étape e) de séchage, et éventuellement au moins ledit liant ou précurseur de liant, dans le cas ou ceux-ci sont présents, sont mélangés, de préférence en une seule fois, dans un malaxeur. Le malaxeur est avantageusement choisi parmi les malaxeurs batch, de préférence à bras à cames ou à bras en Z, ou bien à l'aide d'un malaxeur-mélangeur bi-vis. Les conditions de malaxage sont ajustées de manière connue de l'Homme du métier et visent à obtenir une pâte homogène et extrudable.

Dans les procédés de malaxage - extrusion connus de l'Homme du métier, l'extrudabilité de la pâte peut éventuellement avantageusement être ajustée avec l'ajout d'eau et/ou d'acide en solution, afin d'obtenir une pâte adaptée à la réalisation de l'étape e) de mise en forme par extrusion. Dans le cas où de l'acide est ajouté, une étape de neutralisation est généralement mise en œuvre. Ces procédés sont appelés procédés de malaxage acide/basique extrusion.

Selon un premier mode de réalisation de l'étape f), ladite étape f) de mise en forme peut avantageusement être mise en œuvre directement après l'étape e) de séchage.

De préférence, l'étape f) de mise en forme directe de la pâte séchée est mise en œuvre en l'absence de liant choisi parmi les liants inorganiques, tels que par exemples les liants hydrauliques ou les liants inorganiques susceptibles d'être générés dans les conditions de ladite étape e) par ajout de précurseurs de liants inorganiques, et les liants organiques, tels que par exemple les paraffines ou les polymères.

Dans ce cas, ladite pâte séchée ne subit, de préférence, pas d'étape intermédiaire entre ladite étape e) de séchage et ladite étape f) de mise en forme par extrusion, et de manière préféré aucune étape de malaxage et de manière plus préférée aucune étape de malaxage acide/basique. Ainsi, de manière plus préférée, ladite étape f) de mise en forme selon le premier mode de réalisation est réalisée sans ajout d'acide ni de base à la pâte séchée introduite dans ladite étape f).

Ladite étape f) de mise en forme par extrusion directe est avantageusement réalisée de manière connue de l'Homme du métier.

En particulier, la pâte séchée issue de l'étape e) de séchage passe avantageusement à travers une filière, à l'aide par exemple, d'un piston ou d'une extrudeuse continue double vis ou monovis. Le diamètre de la filière de l'extrudeuse est avantageusement variable et est compris entre 0,5 et 5 mm, de préférence entre 0,5 et 3 mm et de manière préférée entre 0,5 et 2 mm. La forme de la filière, et par conséquent, la forme du matériau obtenu sous forme d'extrudé, est avantageusement cylindrique, par exemple de section transversale circulaire, trilobée, quadrilobée ou bien multilobée.

Selon un deuxième mode de réalisation de l'étape f), ladite étape f) de mise en forme peut avantageusement être mise en œuvre par malaxage - extrusion en présence d'au moins un liant choisi parmi les liants organiques ou inorganiques et de préférence sans ajout d'acide ni de base à la pâte séchée introduite dans ladite étape f).

Dans ledit deuxième mode de réalisation de l'étape f), l'étape de malaxage est de préférence réalisée sans ajout d'acide ou de base. Ainsi, aucune étape d'acidification ni de neutralisation de la pâte séchée n'est mise en œuvre dans l'étape e) de mise en forme par malaxage - extrusion selon l'invention.

La pâte passe ensuite avantageusement à travers une filière, à l'aide par exemple, d'un piston ou d'une extrudeuse continue double vis ou monovis. Le diamètre de la filière de l'extrudeuse est avantageusement variable et est compris entre 0,5 et 5 mm, de préférence entre 0,5 et 3 mm et de manière préférée entre 0,5 et 2 mm. La forme de la filière, et par conséquent, la forme du matériau obtenu sous forme d'extrudé, est avantageusement cylindrique, par exemple de section transversale circulaire trilobée, quadrilobée ou bien multilobée.

Ledit ou lesdits liant(s) organique(s) qui peuvent être utilisés dans ladite étape d) de mise en forme sont avantageusement choisi(s) parmi les paraffines, et les polymères, pris seul ou en mélange.

De préférence, ledit ou lesdits liant(s) organique(s) sont choisi(s) parmi la polyvinylpyrrolidone (PVP), l'alcool polyvinylique (PVA), une dispersion aqueuse d'un mélange de cires de paraffine et de polyéthylène comme par exemple le Cerfobol R75, les polysaccharides, le méthylcellulose, l'hydroxypropylméthylcellulose, l'hydroxyéthylcellulose et le carboxymethylcellulose et pris seul ou en mélange, de préférence parmi la polyvinylpyrrolidone (PVP), l'alcool polyvinylique (PVA) et une dispersion aqueuse d'un mélange de cires de paraffine et de polyéthylène comme par exemple le Cerfobol R75, et de manière préférée parmi la polyvinylpyrrolidone (PVP) et l'alcool polyvinylique (PVA).

Un liant organique très préféré est la polyvinylpyrrolidone (PVP).

Le Cerfobol R75 comprend 28,4% de masse organique paraffine sèche diluée dans une phase aqueuse.

De préférence, ledit ou lesdits liant(s) inorganique(s) utilisés dans ladite étape e) de mise en forme sont avantageusement choisi(s) parmi les liants siliciques, les liants de type argile et les liants inorganiques susceptibles d'être générés dans les conditions de ladite étape e) par ajout de précurseurs de liants inorganiques.

De préférence, ledit ou lesdits liant(s) inorganique(s) utilisés dans ladite étape e) de mise en forme sont avantageusement choisi(s) parmi les liants siliciques.

De préférence, les liants siliciques sont avantageusement choisis parmi la silice de précipitation et la silice issue de sous-produits comme les cendres volantes telle que par exemple les particules silico-alumineuses ou silico-calciques, l'acide silicique, le métasilicate de sodium et les fumées de silice. La silice colloïdale, se présentant par exemple sous la forme d'une suspension stabilisée, telles que par exemple les produits commerciaux tels que le Ludox® ou les Klebosol® peut également être utilisée.

De manière préférée, le liant silicique est sous forme amorphe ou cristalline. De manière très préférée, la silice est utilisée sous forme de poudre ou sous forme colloïdale.

La proportion dudit ou desdits liant(s) organique ou inorganique(s) ajoutée(s) dans ladite étape d) de mise en forme est avantageusement comprise entre 0,5 et 20 en masse, de préférence entre 0,5 et 15% en masse, de manière préférée entre 1 et 13% en masse, par rapport à la masse totale de pâte sèche à mettre en forme.

L'addition d'au moins un liant inorganique ou organique dans ladite étape e) facilite sa mise en forme par extrusion.

L'addition d'au moins un liant inorganique ou organique dans ladite étape e) permet également l'obtention d'un matériau solide cristallisé mis en forme, de préférence sous forme d'extrudés présentant une résistance sous agitation améliorée au contact de la saumure.

Dans le cas où ladite étape e) est mise en œuvre par malaxage - extrusion en présence d'au moins un liant choisi parmi les liants inorganiques susceptibles d'être générés dans les conditions de ladite étape e), ladite étape e) de mise en forme de la pâte séchée est avantageusement réalisée en présence d'une formulation liante comprenant et de préférence constituée d'au moins un précurseur solide d'alumine et d'au moins un acide en solution dans des proportions telles que le ratio molaire acide/Al est compris entre 0,01 et 1,2.

L'introduction dans l'étape f) de mise en forme, d'un précurseur solide d'alumine et d'un acide en solution permet la génération in situ d'un liant minéral résultant de la réaction du précurseur d'alumine et de l'acide introduit, au cours de ladite étape de mise en forme. Par ailleurs, le précurseur solide d'alumine et l'acide en solution doivent être introduits dans ladite étape f) dans les proportions telles que décrites.

La génération dudit liant minéral résultant de la réaction du précurseur solide d'alumine et de l'acide introduit nécessite l'utilisation d'un précurseur solide d'alumine capable de se disperser majoritairement ou de se dissoudre majoritairement dans la solution acide employée.

Le précurseur solide d'alumine est avantageusement choisi parmi les oxydes d'aluminium, les hydroxydes d'aluminium, les oxyhydroxydes d'aluminium et l'un quelconque de leurs mélanges, solubles ou dispersibles dans la solution d'acide phosphorique, de préférence parmi les hydroxydes d'aluminium, les oxyhydroxydes d'aluminium et l'un quelconque de leurs mélanges. De manière très préférée, ledit précurseur solide d'alumine est un oxyhydroxyde d'aluminium et de manière plus préférée ledit précurseur solide d'alumine est la boehmite ou la pseudo-boehmite.

Ledit précurseur solide d'alumine se présente avantageusement sous forme de poudre constituée de particules solides présentant un diamètre médian, déterminé par granulométrie à diffraction laser granulomètre Mastersizer de Malvern, compris entre 9 et 80 µm, de préférence compris entre 10 et 60 µm et de manière préférée entre 15 et 45 µm. Les particules du précurseur solide d'alumine sont avantageusement constituées d'agglomérats d'unités élémentaires, dites cristallites, dont les dimensions sont avantageusement comprises entre 2 et 150 nm, de préférence entre 4 et 150 nm et de manière préférée entre 4 et 100 nm déterminées par microscopie électronique à transmission (MET). La morphologie des cristallites, la taille et la manière dont les cristallites sont organisées, dépendent principalement de la voie de synthèse du précurseur d'alumine utilisé pour préparer lesdites particules micrométriques.

De préférence, la proportion du précurseur solide d'alumine ajoutée dans l'étape f) est comprise entre 0,5 et 50% en masse par rapport à la masse de pate sèche à mettre en forme, de préférence entre 2 et 30% en masse, et de manière préférée entre 3 et 25% en masse.

Dans ce mode de réalisation, au moins un acide en solution est introduit dans le mélange. De préférence, l'acide est choisi parmi l'acide phosphorique, l'acide chlorhydrique, l'acide nitrique, l'acide acétique et l'acide citrique, seul ou en mélange. De manière très préférée, l'acide est l'acide phosphorique.

L'acide phosphorique est aussi appelé acide orthophosphorique.

Le rôle de la solution d'acide est de promouvoir la formation d'une phase amorphe de liant minéral résultant de la réaction avec le précurseur solide d'alumine. De cette manière, les particules du précurseur solide d'alumine deviennent avec l'action de l'acide et de l'énergie mécanique apportée pendant l'étape f) de mise en forme, une phase amorphe de liant minéral.

De préférence, l'acide ou les acides en solution est (sont) introduit(s) dans des proportions telles que le ratio molaire acide/Al est compris entre 0,01 et 1,2, et de préférence entre 0,03 et 1.

Dans le cas où l'acide introduit est l'acide phosphorique, il est introduit en solution dans des proportions telles que le ratio molaire P/Al est compris entre 0,01 et 1,2, de préférence entre 0,3 et 1,0.

Dans le ratio molaire P/Al, P provient de l'acide phosphorique introduit et Al provient du précurseur solide d'alumine.

Le ratio molaire P/Al spécifique selon l'invention correspond à une proportion d'acide phosphorique telle que le rapport de la masse d'acide introduit sur la masse de précurseur solide d'alumine introduit soit compris entre 30 et 225% en masse, de préférence entre 59 et 170% en masse et de manière préférée.

L'emploi d'un ratio molaire acide/Al compris entre 0,01 et 1,2, caractéristique d'une dissolution à rapport d'acide élevé, dans l'étape d) de mise en forme permet à la fois de former la phase amorphe de liant minéral résultant de la réaction avec le précurseur solide d'alumine, mais également, de faciliter encore la mise en forme par extrusion et d'augmenter la cohésion et la résistance mécanique des extrudés obtenus selon ce mode de réalisation.

Selon un troisième mode de réalisation de l'étape f), ladite étape f) de mise en forme peut avantageusement être mise en œuvre par malaxage - extrusion basique dans laquelle ladite pate séchée issue de l'étape e) est malaxée en présence d'une quantité de base comprise entre 0,5 et 3 % poids par rapport à la matière sèche, la matière sèche étant la masse de ladite pate issue de l'étape e), séchée de préférence en étuve à 200°C de préférence pendant 6h, ladite base étant choisie parmi les bases inorganiques et les bases organiques en solution, et dans laquelle ladite pate est ensuite soumise à une étape d'extrusion.

De préférence, ladite pate séchée est malaxée en présence d'une quantité de base comprise entre 0,5 et 2,5 % poids par rapport par rapport à la matière sèche, la matière sèche étant la masse de ladite pate issue de l'étape e), séchée de préférence en étuve à 200°C de préférence pendant 6h.

Dans le cas où la quantité de base ajoutée est supérieure à 3%poids, les performances du solides en adsorption sont fortement dégradées.

De préférence, les bases inorganiques sont choisies parmi la soude, la potasse, l'ammoniaque et l'un quelconque de leurs mélanges, et les bases organiques en solution sont choisies parmi les amines, les composés ammonium quaternaire et l'un quelconque de leurs mélanges. De manière préférée les bases organiques en solution sont choisies parmi les alkyl-éthanol amines, les alkyl- amines éthoxylées et l'un quelconque de leurs mélanges. Les bases organiques sont de préférence utilisées en solution dans l'eau.

De manière très préférée, ladite base est l'ammoniaque et de préférence l'ammoniaque en solution aqueuse (NH₄OH).

De préférence, aucun acide n'est ajouté dans l'étape f) de mise en forme par malaxage extrusion.

Dans le cas ou ladite étape f) de mise en forme par malaxage - extrusion et en particulier ladite étape de malaxage est réalisée en présence d'un liant, ledit liant est avantageusement choisi parmi les liants organiques ou inorganiques tels que décrits ci-dessus.

Conformément à l'invention, le matériau mis en forme et de préférence les extrudés obtenus à l'issue de l'étape d) subi(ssen)t une étape g) de séchage à une température comprise entre 20 et 200°C de préférence pendant une durée comprise entre 1 heure et 20 heures, pour obtenir le matériau solide cristallisé de formule (LiCl)ₓ.2Al(OH)₃,nH₂O mis en forme, de préférence sous forme d'extrudés.

De préférence, ladite étape g) de séchage est mise en œuvre à une température comprise entre 20 et 100°C, de manière préférée entre 20 et 80°C et de manière très préférée entre 20 et 60°C, de préférence pendant une durée de préférence comprise entre 1 et 18 heures, de préférence entre 5 et 14 heures et de manière préférée entre 8 et 14 heures.

Les conditions spécifiques de ladite étape e) de séchage permettent l'obtention d'un matériau solide cristallisé présentant la phase (LiCl)ₓ.2Al(OH)₃,nH₂O désirée.

Ladite étape g) de séchage est avantageusement réalisée selon les techniques connues de l'Homme du métier et de préférence en étuve ou en four.

De préférence, le matériau mis en forme séché et de préférence les extrudés obtenu(s) à l'issue de l'étape g) peu(ven)t éventuellement être soumis à une étape de traitement hydrothermal à une température comprise entre 50 et 200°C et de préférence pendant une durée comprise entre 30 min et 12 heures.

De préférence, ladite étape h) est mise en œuvre à une température comprise entre 70 et 200°C, de manière préférée entre 70 et 180°C, et de manière très préférée entre 80 et 150°C, par exemple pendant une durée comprise entre 30 minutes et 120 heures.

Ladite étape h) de traitement hydrothermal est avantageusement réalisée selon une technique connue de l'homme du métier.

Selon un mode de réalisation préféré, ladite étape h) est réalisée en autoclave, sous pression autogène et sous une atmosphère saturée en eau. De préférence, ladite étape h) est réalisée en introduisant un liquide au fond de l'autoclave, ledit liquide étant choisi parmi l'eau, seule ou en mélange avec au moins un acide, une base ou un sel de lithium. De préférence, le matériau mis en forme et séché, et de préférence les extrudés obtenu(s) à l'issue de l'étape g) ne sont pas en contact avec le liquide au fond de l'autoclave.

Dans le cas où de l'eau est introduite dans l'autoclave en mélange avec un acide, l'acide est avantageusement choisi parmi l'acide nitrique, l'acide chlorhydrique, l'acide sulfurique et un acide carboxylique.

Dans le cas où de l'eau est introduite dans l'autoclave en mélange avec une base, la base est avantageusement choisie parmi l'hydroxyde de lithium, l'hydroxyde de sodium, l'hydroxyde de potassium, l'ammoniaque et l'un quelconque de leurs mélanges.

Dans le cas où de l'eau est introduite dans l'autoclave en mélange avec un sel de lithium, le sel de lithium est avantageusement choisi parmi le chlorure de lithium, le carbonate de lithium et l'un quelconque de leurs mélanges.

De préférence, ladite étape h) est mise en œuvre en présence d'une atmosphère humide comprenant une teneur en eau comprise entre 5 et 50% masse, et de préférence entre 5 et 45% en masse, et de préférence entre 5 et 40% masse.

Selon un mode de réalisation, ladite étape h) peut être réalisée en étuve climatique, en présence d'un flux d'air humide contenant entre 5 et 50% masse d'eau de préférence entre 5 et 45% masse et de manière préférée entre 4 et 40% masse d'eau, ou dans un four opérant sous un flux d'air humide contenant entre 5 et 50% masse d'eau de préférence entre 5 et 45% masse et de manière préférée entre 5 et 40% masse d'eau selon les méthodes connues de l'Homme du métier.

L'étape h) de traitement hydrothermal en atmosphère contrôlée permet l'obtention d'un matériau solide cristallisé de formule (LiCl)ₓ.2Al(OH)₃,nH₂O avec n étant compris entre 0,01 et 10, x étant compris entre 0,4 et 1, mis en forme de préférence sous forme d'extrudés, présentant une bonne tenue et une bonne résistance mécanique lorsque celui-ci est placé au contact d'une saumure ou d'une solution diluée et de préférence de l'eau.

A l'issue de ladite étape h), le matériau, mis en forme de préférence sous forme d'extrudés, obtenu est ensuite avantageusement récupéré et peut éventuellement être lavé.

Ledit matériau mis en forme et de préférence les extrudés obtenu(s) à l'issue de l'étape h) peu(ven)t ensuite éventuellement être soumis à une étape de séchage i), ladite étape de séchage opérant de préférence à une température comprise entre 15 et 50°C de préférence pendant une durée comprise entre 1h et 12 heures pour obtenir le matériau solide cristallisé de formule (LiCl)ₓ.2Al(OH)₃,nH₂O avec n étant compris entre 0,01 et 10, x étant compris entre 0,4 et 1, mis en forme.

Ladite étape i) de séchage est avantageusement réalisée selon les techniques connues de l'Homme du métier, et de préférence en étuve ou en four.

Le procédé selon la présente invention permet donc l'obtention d'un matériau solide cristallisé de formule (LiCl)ₓ.2Al(OH)₃,nH₂O avec n étant compris entre 0,01 et 10, x étant compris entre 0,4 et 1, de préférence sous forme d'extrudés de section (plus grande dimension de la section transversale) ou diamètre compris entre 0,2 et 5 mm, de préférence entre 0,3 et 4 mm, de manière préférée entre 0,3 et 3 mm, de manière très préférée entre 0,3 et 2 mm et de manière encore plus préférée entre 0,3 et 1,8 mm.

Les meilleurs résultats en terme de tenue mécanique et de cohésion du matériau solide cristallisé obtenus selon le procédé de préparation selon l'invention sont obtenus dans le cas d'extrudés de section (plus grande dimension de la section transversale) ou diamètre compris entre 0,2 et 5 mm et de préférence compris entre 0,3 et 1,8 mm, lesdits extrudés étant susceptibles d'être obtenus grâce à la combinaison d'une étape de mise en forme spécifique telle que décrite ci-dessus et d'une étape de séchage i) finale réalisée à une température comprise entre 20 et 200°C, de préférence comprise entre 20 et 60°C et en particulier à 40°C, de préférence pendant une durée comprise entre 1 et 20 heures, de préférence comprise entre 5 et 14 heures, de préférence entre 8 et 14 heures et en particulier pendant 8 heures.

Le matériau solide cristallisé de formule (LiCl)ₓ.2Al(OH)₃,nH₂O mis en forme, de préférence sous forme d'extrudés, susceptible d'être préparé selon l'enchainement des étapes a) à i) du procédé de préparation selon l'invention peut être caractérisé selon les techniques suivantes : l'adsorption d'azote pour la détermination de la surface spécifique selon la méthode BET; la diffractométrie de rayons X, dans le domaine d'angle de diffraction 2θ = 0,8 à 40° ± 0,02° en géométrie de réflexion pour identifier la structure dudit matériau et l'analyse élémentaire.

Le matériau solide cristallisé de formule (LiCl)ₓ.2Al(OH)₃,nH₂O mis en forme, de préférence sous forme d'extrudés, présente avantageusement une surface spécifique mesurée selon la méthode BET comprise entre 1 et 30 m²/g et de préférence entre 1 et 20 m²/g.

Le diagramme de diffraction de rayon X du matériau sous forme d'extrudés correspond à un solide cristallisé de formule (LiCl)ₓ.2Al(OH)₃,nH₂O avec x=1 selon la fiche JCPDS n° 0031-07-00, avec n étant compris entre 0,01 et 10, de préférence entre 0,1 et 0,5 de manière préférée entre 0,1 et 5 et de manière très préférée entre 0,1 et 1, mis en forme, avantageusement sous forme d'extrudés.

Le procédé de préparation selon la présente invention permet donc l'obtention d'un matériau solide cristallisé de formule (LiCl)ₓ.2Al(OH)₃,nH₂O, n et x ayant la définition précitée mis en forme de préférence sous forme d'extrudés, présentant à la fois une surface spécifique BET faible, une bonne cohésion, et n'ayant pas de défaut apparent et présentant une bonne tenue et une bonne résistance mécanique lorsque celui-ci est placé au contact d'une saumure ou d'une solution diluée et de préférence dans l'eau.

Les bonnes propriétés du matériau obtenu résultent de l'effet combiné de mise en forme de préférence par extrusion d'une pâte, en l'absence de liant, directement, après une étape de séchage opérant dans des conditions spécifiques, de la mise en œuvre d'une étape de séchage suivant la mise en forme, opérant également dans des conditions spécifiques et de préférence de la mise en œuvre d'une étape de traitement hydrothermal final opérant de préférence en autoclave.

Par ailleurs, le matériau solide cristallisé mis en forme, de préférence sous forme d'extrudés, ainsi obtenu de formule (LiCl)ₓ.2Al(OH)₃,nH₂O avec n et x ayant la définition précitée, présente une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Les matériaux obtenus selon l'invention présentent une capacité d'adsorption améliorée par rapport aux matériaux de l'art antérieur supérieure à 6 mg de Li/g de matériau solide sec, c'est-à-dire de matériau solide séché à 200 °C, de préférence comprise entre 6 et 10 mg de Li/g, de manière préférée entre 6 et 8 et de manière très préférée entre 6 et 7 mg de Li/g de matériau solide sec.

La présente invention a également pour objet un procédé d'extraction du lithium à partir d'une solution saline utilisant ledit matériau solide cristallisé de formule (LiCl)ₓ.2Al(OH)₃,nH₂O avec n étant compris entre 0,01 et 10, x étant compris entre 0,4 et 1, préparé selon l'invention.

Ladite solution saline utilisée dans le procédé d'extraction selon l'invention comprend avantageusement une concentration en lithium comprise entre 0,001 mol/L et 0,5 mol/L, de préférence entre 0,02 mol/L et 0,3 mol/L.

Ladite solution saline contient également une ou plusieurs espèces, telles que par exemple les espèces choisies parmi la liste suivante : Na, K, Rb, Cs, Mg, Ca, Sr, Ba, F, Cl, Br, l, SO₄, CO₃, NO₃, et HCO₃. Ladite solution saline peut avantageusement être saturée en sels ou non.

Ladite solution saline peut être toute solution saline naturelle, concentrée ou issue d'un procédé d'extraction ou de transformation du lithium. Par exemple, ladite solution saline utilisée dans le procédé d'extraction selon l'invention peut avantageusement être choisie parmi les saumures de lacs salés ou de sources géothermales, les saumures soumises à une évaporation pour obtenir des saumures concentrées en lithium, l'eau de mer, les effluents des usines de production de cathodes, ou de production de chlorure ou d'hydroxyde de lithium et les effluents des procédé d'extraction du lithium à partir de minéraux.

Le procédé d'extraction du lithium selon l'invention est de préférence un procédé d'extraction sélective du lithium. En effet, il permet la séparation du lithium des métaux alcalins, de préférence le sodium (Na), et le potassium (K) et des alcalino-terreux, de préférence le magnésium (Mg), le calcium (Ca) et le strontium (Sr), présents en quantité massive dans les solutions salines traitées dans ledit procédé d'extraction.

Le procédé d'extraction du lithium selon l'invention permet également la séparation sélective du lithium des autres composés tels que le bore et les sulfates.

Le procédé d'extraction du lithium selon l'invention est avantageusement mis en œuvre dans une unité comprenant au moins une colonne, la ou lesdites colonnes comprenant au moins un lit dudit matériau solide cristallisé de formule (LiCl)ₓ.2Al(OH)₃,nH₂O, avec n, et x ayant la définition précitée, mis en forme et préparé selon le procédé de préparation selon l'invention.

De préférence, ledit procédé d'extraction du lithium selon l'invention est mis en œuvre dans une unité comprenant au moins deux colonnes, et de manière préférée entre deux et trois colonnes, comprenant au moins un lit du matériau solide cristallisé de formule (LiCl)ₓ.2Al(OH)₃,nH₂O, avec n, et x ayant la définition précitée et étant susceptible d'être obtenu selon un procédé tel que défini selon l'invention.

Ledit procédé d'extraction du lithium comprend avantageusement au moins les étapes suivantes :
- une étape d'activation dudit matériau solide cristallisé de formule (LiCl)ₓ.2Al(OH)₃,nH₂O, avec n et x ayant la définition précitée,
- une étape de chargement dudit matériau activé par adsorption réalisée par passage de ladite solution saline sur ledit matériau activé,
- éventuellement au moins une étape de lavage de la solution saline imprégnant ledit matériau par passage d'une solution de lavage sur ledit matériau,
- une étape de désorption du lithium réalisée par passage d'eau ou d'une solution aqueuse de sel de lithium sur ledit matériau pour obtenir un éluat comprenant au moins du lithium.

De préférence, le procédé d'extraction du lithium selon l'invention comprend une étape préalable de mise en colonne dudit matériau.

De préférence, ledit procédé d'extraction comprend une étape optionnelle de lavage de la solution saline imprégnant ledit matériau par passage d'une solution de lavage sur ledit matériau, ladite étape de lavage étant de préférence mise en œuvre entre l'étape de chargement et l'étape de désorption.

De préférence, ladite étape d'activation du matériau solide cristallisé de formule (LiCl)ₓ.2Al(OH)₃,nH₂O, avec n et x ayant la définition précitée, de préférence mis en forme, et de préférence sous forme d'extrudés, est réalisée une seule fois lors de la mise en colonne du matériau synthétisé et mis en forme selon le procédé de préparation selon l'invention.

Ladite étape d'activation permet d'activer les sites destinés à adsorber sélectivement le lithium.

De préférence, ladite étape d'activation est avantageusement réalisée par le passage ascendant ou descendant d'une solution d'activation choisi parmi l'eau et une solution de sel de lithium ayant une concentration comprise entre 0,001 mol/L et 0,1 mol/L, de préférence entre 0,001 mol/L et 0,05 mol/L et de manière préférée entre 0,01 et 0,04 mol/L.

De manière préférée, le sel de lithium utilisé en solution dans ladite étape d'activation est choisi parmi le chlorure de lithium (LiCl), le nitrate de lithium et le bromure de lithium.

De manière très préférée, le sel de lithium utilisé en solution dans ladite étape d'activation est le chlorure de lithium (LiCl).

Ladite étape d'activation est avantageusement réalisée à une température comprise entre 0°C et 90°C, et de préférence entre 10°C et 60°C, et de manière préférée entre 10°C et 30°C avec un temps de séjour de ladite solution d'activation dans la colonne de préférence compris entre 0,03 et 10 h, et de préférence entre 0,06 et 1 h.

La quantité de solution nécessaire à l'activation est avantageusement comprise entre 1 et 30 volumes de colonne, de préférence entre 2 et 20 volumes de colonne.

Le volume de colonne ou « Bed Volume » selon la terminologie anglo-saxonne est également appelé volume occupé par le lit du solide dans la colonne ou BV selon la terminologie propre au domaine technique connu de l'Homme du métier.

Ledit matériau solide cristallisé peut éventuellement subir préalablement l'étape d'activation une étape de lavage avec une solution de lavage et de préférence une solution de chlorure de lithium (LiCl) ou un mélange de chlorure de lithium (LiCl) et de chlorure de sodium (NaCl).

Ladite étape de chargement dudit matériau activé par adsorption est avantageusement réalisée par passage de la solution saline traitée dans le procédé d'extraction selon l'invention, sur ledit matériau activé.

Ladite étape de chargement est avantageusement effectuée à une température comprise entre 0°C et 90°C, et de préférence entre 10°C et 70°C avec un temps de séjour de ladite solution, de préférence de ladite solution saline traitée, dans la colonne de préférence compris entre 0,03 et 10 h, et de préférence entre 0,06 et 1 h 30 minutes.

La quantité de solution nécessaire pour saturer ledit matériau dépend de la capacité d'adsorption dudit matériau et de la concentration en lithium de la solution saline.

La capacité d'adsorption des matériaux selon l'invention est supérieure à 6 mg de Li/g de matériau solide sec, de préférence comprise entre 6 et 10 mg de Li/g, de manière préférée entre 6 et 8 et de manière très préférée entre 6 et 7 mg de Li/g de matériau solide sec.

Dans le cas où ledit procédé d'extraction du lithium selon l'invention est mis en œuvre dans une unité comprenant deux colonnes, la première colonne est avantageusement saturée par le lithium lors de ladite étape de chargement. La deuxième colonne, recevant le flux de sortie de la première colonne, est avantageusement chargée jusqu'à l'obtention d'une fuite en lithium ne dépassant pas 10% de la concentration en lithium du flux d'entrée et de préférence 5%, permettant ainsi de maximiser le rendement de récupération en lithium.

Dans le cas où ledit procédé d'extraction du lithium selon l'invention est mis en œuvre dans une unité comprenant trois colonnes, la troisième colonne, déjà saturée en lithium, est consacrée aux étapes de lavage puis de désorption du lithium, décrites ci-après, pendant le chargement des deux autres colonnes.

La première fraction du flux de sortie de ladite étape de chargement par adsorption, avantageusement entre 0 et 1 volume de colonne, correspond à l'élimination de l'imprégnant issu de l'étape d'activation du matériau solide. Cette fraction peut être considérée comme un effluent ou recyclée, et de préférence recyclée comme flux d'entrée de l'étape de désorption. Dans le cas du traitement d'une saumure naturelle ou d'eau de mer, au-delà de 1 volume de colonne, l'intégralité du flux de sortie de ladite étape de chargement par adsorption, appelé ci-après raffinat qui n'a subi aucun traitement chimique, est avantageusement et de préférence renvoyé vers le gisement de solution saline d'origine.

A l'issue de l'étape de chargement par passage de la solution saline traitée dans le procédé selon l'invention sur le matériau activé, la solution saline imprègne ledit matériau activé.

La solution saline imprégnant le matériau activé est éventuellement lavée dans au moins une étape de lavage par passage d'une solution de lavage sur ledit matériau.

Ladite ou lesdites étape(s) de lavage de la solution saline imprégnant ledit matériau, est (sont) avantageusement réalisée(s) par passage ascendant ou descendant d'une solution de lavage sur ledit matériau, et de préférence descendant.

De préférence, ladite solution de lavage est choisie parmi l'eau et une solution aqueuse de sel de sodium et de préférence de chlorure de sodium (NaCl), comprenant éventuellement un sel de lithium et de préférence le chlorure de lithium (LiCl), ladite solution présentant avantageusement une concentration en sel de sodium et de préférence en chlorure de sodium (NaCl), supérieure à 0,5 mol/L, de préférence comprise entre 1 mol/L et la saturation et une concentration en sel de lithium et de préférence en chlorure de lithium (LiCl), comprise entre 0 mol/L et 2 mol/L.

Selon un mode de réalisation préféré, ladite solution saline imprégnant le matériau activé subit une étape finale de lavage par passage d'une solution de lavage aqueuse de chlorure de sodium (NaCl) comprenant éventuellement du chlorure de lithium (LiCl), sur ledit matériau.

Ladite étape de lavage est avantageusement réalisée à une température comprise entre 0°C et 90°C, et de préférence entre 10°C et 70°C, et de préférence avec un temps de séjour de ladite solution, de préférence de ladite solution de lavage dans la colonne compris entre 0,03 et 10 h, et de préférence entre 0,06 et 1 h. La quantité de solution nécessaire au lavage est en général comprise entre 0,1 et 10 volumes de colonne, et de préférence dans la gamme 0,5 à 5 volumes de colonne.

Le flux de sortie de ladite étape de lavage est considéré comme un effluent ou est avantageusement recyclé, et de préférence recyclé à l'entrée de l'étape de chargement ou directement à l'entrée de la deuxième colonne dans le cas où ledit procédé d'extraction du lithium selon l'invention est mis en œuvre dans une unité comprenant au moins deux colonnes.

Ladite étape de lavage permet le lavage de la solution saline imprégnée dans ledit matériau lors de l'étape de chargement dudit matériau par adsorption, tout en limitant la désorption du lithium.

Dans le cas où ladite solution de lavage est une solution aqueuse concentrée de chlorure de sodium (NaCl), ladite étape de lavage permet non seulement d'éliminer la solution saline imprégnée dans ledit matériau lors de l'étape de chargement dudit matériau par adsorption mais aussi de désorber les éléments tels que le bore, les sulfates, les alcalins autres que le lithium et le sodium et les alcalino-terreux.

L'étape de désorption du lithium est ensuite réalisée par passage d'eau ou d'une solution aqueuse de chlorure de lithium (LiCl) sur ledit matériau à l'issue de l'étape de lavage pour obtenir un éluat comprenant au moins du lithium.

De préférence, ladite étape de désorption est réalisée par passage ascendant ou descendant, et de préférence descendant, d'une solution de désorption choisie parmi l'eau et une solution de chlorure de lithium (LiCl) contenant de 0,001 mol/L à 2 mol/L de LiCl, et de préférence de 0,01 mol/L à 1 mol/L.

Ladite étape de désorption est avantageusement réalisée à une température comprise entre 0°C et 90°C, et de préférence entre 10°C et 70°C avec de préférence un temps de séjour de ladite solution de désorption dans la colonne compris entre 0,03 et 10 h, et de préférence entre 0,06 et 1 h.

La quantité de solution de chlorure de lithium (LiCl) nécessaire à la désorption est avantageusement comprise entre 0,01 et 10 volumes de colonne, et de préférence entre 0,05 et 5 volumes de colonne.

Le flux de sortie de ladite étape de désorption du lithium génère le produit final du procédé, appelé éluat.

L'éluat est avantageusement récupéré entre 0 et 4 volumes de colonne, et de préférence entre 0,2 et 3 volumes de colonne.

L'ensemble des autres fractions du flux de sortie de cette étape ne constituant pas le produit final appelé éluat, est considéré comme un effluent ou est avantageusement recyclé, et de préférence recyclé à l'entrée de l'étape de chargement, de lavage ou d'élution.

L'éluat obtenu à l'issue du procédé d'extraction selon l'invention est une solution contenant majoritairement les éléments Li, Na et Cl ainsi que des impuretés de préférence choisies parmi K, Mg, Ca, Sr, B ou SO₄.

L'éluat est ensuite avantageusement concentré et purifié pour obtenir un sel de lithium de haute pureté.

Ledit procédé d'extraction du lithium selon l'invention permet l'extraction sélective du lithium à partir d'une solution saline et permet ainsi d'obtenir un facteur d'épuration élevé par rapport à la solution saline initiale, calculé comme étant le rapport X/Li qui est égal au rapport molaire de concentration X/Li dans la solution saline initiale divisé par le rapport molaire de concentration X/Li dans l'éluat, X étant choisi parmi le sodium (Na), le potassium (K), le magnésium (Mg), le calcium (Ca), le bore (B), le soufre (S) et le strontium (Sr).

La présente invention couvre également un dispositif d'extraction de lithium caractérisé en ce qu'il comprend une unité comprenant au moins une colonne, ladite colonne comprenant au moins une garniture comprenant le matériau solide cristallisé de formule (LiCl)ₓ.2Al(OH)₃,nH₂O, avec n et x ayant la définition précitée, et étant susceptible d'être obtenu selon un procédé tel que défini selon l'invention.

Plus particulièrement, l'invention couvre un dispositif mettant en œuvre le procédé d'extraction de lithium selon l'invention. Encore plus précisément, le dispositif de la présente invention comprend des unités ou moyens mettant en œuvre les différentes étapes du procédé d'extraction de lithium selon l'invention.

Par « selon l'invention » ou des termes équivalents, on entend couvrir tout mode de réalisation, variante, caractéristique avantageuse ou préférée, pris seul ou selon l'une quelconque de leurs combinaisons, sans aucune limitation.

### Description des figures :

Les figures 1 et 3 représentent les diagrammes de diffraction des rayons X des boehmites précipitées obtenues respectivement dans les exemples 1 à 3 pour la figure 1 et l'exemple 4 pour la figure 3.
Les figures 2 et 4 représentent les diagrammes de diffraction des rayons X des matériaux solides obtenus sous forme d'extrudés respectivement dans les exemples 1 à 3 pour la figure 2 et l'exemple 4 pour la figure 4.
La figure 5 représente la courbe de saturation selon l'exemple 5, réalisée à partir des extrudés obtenus aux exemples 1 à 4.

L'invention est illustrée par les exemples suivants qui ne présentent, en aucun cas, un caractère limitatif.

### Exemples:

### Exemple 1 : (selon l'invention) :

On prépare un matériau solide de formule (LiCl)ₓ.2Al(OH)₃,nH₂O avec n étant compris entre 0,01 et 1 et x = 0,6, selon un procédé de synthèse conforme à l'invention, dans lequel l'étape c) de mise en contact est réalisée avec un ratio Li/Al de 0,5 et l'étape de mise en forme est mise en œuvre par extrusion directe, sans liant.

### 1/ précipitation de boehmite AIOOH

Dans un bêcher refroidit par un bain de glace, une solution contenant 326 ml d'eau permutée et 135,6 g de chlorure d'aluminium hexahydraté (AlCl₃,6H₂O) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. Ce gâteau est mis en suspension dans un bêcher de 3 L avec 320 mL d'eau.

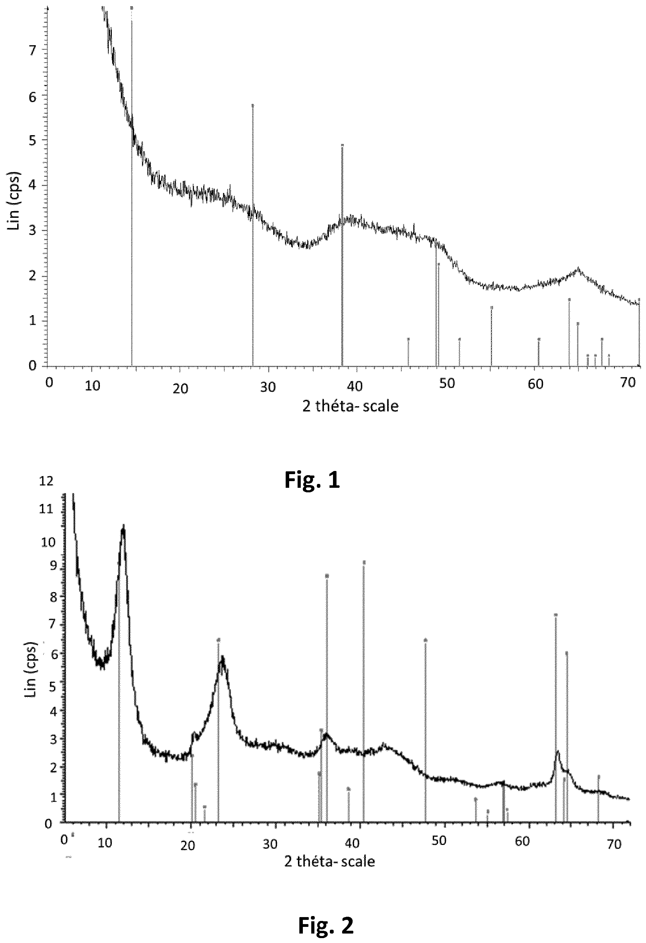

Un échantillon du précipité obtenu est prélevé du milieu réactionnel. La DRX (figure 1) du précipité montre que le précipité obtenu dans l'exemple 1 est bien un précipité de boehmite. Le précipité de boehmite obtenu dans l'exemple 1 est peu cristallisé.

La taille des cristallites de la boehmite obtenue est mesurée selon la méthode de Sherrer :
Taille selon [020] = 0,6 ± 0,1 (nm) ; Taille selon [120]=1,4 ± 0,1 (nm)

### 2/ Addition du chlorure de lithium LiCl.

On prépare une solution contenant 11,9 g de chlorure de lithium LiCl fourni par la société Prolabo, ceci correspond à un ratio molaire Li/Al de 0,5, et 1326 ml d'eau qui est additionnée au gâteau de l'étape 1 précédente repulpé. Ce milieu réactionnel est agité et chauffé à 80°C pendant 2 h.

Une filtration puis un séchage en étuve à 80°C pendant 8h suivent les 2 premières étapes.

Le matériau solide ainsi préparé se caractérise par la formule **(LiCl)x.2Al(OH)₃,nH₂O** avec n = 0,25 et x = 0,6 selon un procédé de synthèse conforme à l'invention. L'étape de mise en forme de la pâte obtenue est réalisée directement après l'étape de séchage, sans étape de malaxage préalable et en l'absence de liant. La pâte obtenue est mise en forme à l'aide d'une extrudeuse piston (MTS), équipée d'une filière cylindrique de 1 mm de diamètre.

Les extrudés sont ensuite séchés en étuve à 40°C pendant 12h.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

Les extrudés du matériau solide obtenu présente une bonne cohésion et un aspect correcte. D'après le diagramme de diffraction des rayons X, une phase LiCl.2Al(OH)₃,nH₂O est détectée (figure 2).

Les extrudés obtenus sont également caractérisés par les mesures suivantes :
L'analyse élémentaire montre une bonne stœchiométrie Li/Al/Cl correspondant à la composition d'une structure (LiCl)_{0,6}.2Al(OH)₃,nH₂O.
Al= 24,8 % masse ; Li= 1,9 % masse ; Cl;= 9,8 % masse.

Les extrudés obtenus présentent une surface spécifique : SBET = 3 m²/g.

Les extrudés obtenus selon l'exemple 1 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

### Exemple 2 : (selon l'invention) :

On prépare un matériau solide de formule (LiCl)ₓ.2Al(OH)₃,nH₂O avec n étant compris entre 0,01 et 1 et x = 0,6, selon un procédé de synthèse conforme à l'invention, dans lequel l'étape c) de mise en contact est réalisée avec un ratio molaire Li/Al de 0,5 et l'étape de mise en forme est mise en œuvre par malaxage extrusion basique.

### 1/ précipitation de boehmite AIOOH

Dans un bêcher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bêcher de 3 L avec 320 mL d'eau.

Un échantillon du précipité obtenu est prélevé du milieu réactionnel. La DRX du précipité est identique à la DRX obtenue dans l'exemple 1 (cf figure 1) et montre que le précipité obtenu dans l'exemple 2 est bien un précipité de boehmite. Le précipité de boehmite obtenu dans l'exemple 2 est peu cristallisé.

La taille des cristallites de la boehmite obtenue est mesurée selon la méthode de Sherrer :
Taille selon [020] = 0,6 ± 0,1 (nm) ; Taille selon [120]=1,4 ± 0,1 (nm)

### 2/ Addition du chlorure de lithium LiCI.

On prépare une solution contenant 11,9 g de chlorure de lithium LiCl fourni par la société Prolabo, ceci correspond à un ratio Li/Al de 0,5 et 1326 ml d'eau qui est additionnée au gâteau repulpé de l'étape 1/ précédente. Ce milieu réactionnel est agité et chauffé à 80°C pendant 2 h.

Une filtration puis un séchage en étuve à 80°C pendant 8h suivent les 2 premières étapes.

### 3/ Malaxage extrusion

L'étape de mise en forme est réalisée par malaxage puis extrusion. Pour l'étape de malaxage, 35,5g de pâte obtenue ci-dessus, est introduit dans un malaxeur de type Brabender (volume cuve 80ml) avec 1,39g de solution ammoniacale à 20,18% poids ce qui correspond à 1% poids de base (NH₄OH) par rapport à la matière sèche, la matière sèche étant la masse de ladite pate issue du séchage précédent, séchée en étuve à 200°C pendant 6h. La solution ammoniacale est mélangée avec 16g d'eau déminéralisée et est ajoutée en 2 minutes sous un malaxage à 50 tours/min. Un complément d'eau d'environ 2,7g est ajouté afin d'obtenir une pâte cohésive, homogène et extrudable. Le malaxage est poursuivi à la même vitesse pendant 30 minutes après la fin de l'ajout de l'ammoniaque et de l'eau.

La pâte obtenue est mise en forme à l'aide d'une extrudeuse piston (MTS), équipée d'une filière cylindrique de 1 mm de diamètre.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

Les extrudés du matériau solide obtenu à l'exemple 2 présente une bonne cohésion et un aspect correcte. D'après le diagramme de diffraction des rayons X, une phase LiCl.2Al(OH)₃,nH₂O est détectée (figure 2).

La DRX du matériau final est identique à la DRX du matériau obtenu à l'exemple 1 (cf figure 2).

Les extrudés obtenus sont également caractérisés par les mesures suivantes :
L'analyse élémentaire montre une bonne stœchiométrie Li/Al/Cl correspondant à la composition d'une structure (LiCl)_{0,6}.2Al(OH)₃,nH₂O
Al= 24,8 % masse ; Li= 1,9 % masse ; Cl;= 9,8 % masse.

Les extrudés obtenus présentent une surface spécifique : SBET = 3 m²/g.

Les extrudés obtenus selon l'exemple 2 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

### Exemple 3 : (comparatif) :

On prépare un matériau solide de formule (LiCl)ₓ.2Al(OH)₃,nH₂O avec n étant compris entre 0,01 et 1 et x = 1, selon un procédé de synthèse non conforme à l'invention, en ce que l'étape c) de mise en contact est réalisée avec un ratio Li/Al de 3,3. L'étape de mise en forme est mise en œuvre par malaxage extrusion basique.

### 1/ précipitation de boehmite AIOOH

Dans un bêcher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bêcher de 3 L avec 320 mL d'eau.

Un échantillon du précipité obtenu est prélevé du milieu réactionnel. La DRX du précipité est identique à la DRX obtenue dans l'exemple 1 (cf figure 1) et montre que le précipité obtenu dans l'exemple 3 est bien un précipité de boehmite. Le précipité de boehmite obtenu dans l'exemple 3 est peu cristallisé.

La taille des cristallites de la boehmite obtenue est mesurée selon la méthode de Sherrer :
Taille selon [020] = 0,6 ± 0,1 (nm) ; Taille selon [120]=1,4 ± 0,1 (nm)

### 2/ Addition du chlorure de lithium LiCl.

On prépare une solution contenant 78,5 g de chlorure de lithium LiCl fourni par la société Prolabo, ceci correspond à un ratio Li/Al de 3,3, et 1326 ml d'eau qui est additionnée au gâteau repulpé de l'étape 1 précédente. Ce milieu réactionnel est agité et chauffé à 80°C pendant 2 h.

Une filtration puis un séchage en étuve à 80°C pendant 8h suivent les 2 premières étapes.

### 3/Malaxaqe extrusion

L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 1,39g de solution ammoniacale à 20,18% poids ce qui correspond à 1% poids de base (NH₄OH) par rapport à la matière sèche, la matière sèche étant la masse de ladite pate issue du séchage précédent, séchée en étuve à 200°C pendant 6h. La solution ammoniacale est mélangée avec 16g d'eau déminéralisée et est ajoutée en 2 minutes sous un malaxage à 50 tours/min. Un complément d'eau d'environ 2,7g est ajouté afin d'obtenir une pâte cohésive, homogène et extrudable. Le malaxage est poursuivi à la même vitesse pendant 30 minutes après la fin de l'ajout de l'ammoniaque et de l'eau.

La pâte obtenue est mise en forme à l'aide d'une extrudeuse piston (MTS), équipée d'une filière cylindrique de 1 mm de diamètre.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

Des extrudés du matériau solide de formule (LiCl)ₓ.2Al(OH)₃,nH₂O avec n = 0,25 et x = 1 présentant une bonne cohésion et un aspect correct sont obtenus. Une phase LiCl.2Al(OH)₃,nH₂O est détectée sur le diagramme de diffraction des rayons X des extrudés du matériau solide de formule (LiCl)ₓ.2Al(OH)₃,nH₂O avec n = 0,25 et x = 1 obtenu à l'exemple 3. La DRX du matériau final est identique à la DRX du matériau obtenu à l'exemple 1 (cf figure 2).

Les extrudés obtenus sont également caractérisés par les mesures suivantes :
L'analyse élémentaire montre une bonne stœchiométrie Li/Al/Cl correspondant à la composition d'une structure LiCl.2Al(OH)₃,nH₂O
Al= 23 % masse ; Li= 3 % masse ; Cl;= 15,1 % masse.

Les extrudés obtenus présentent une surface spécifique : SBET = 3 m²/g.

Les extrudés obtenus selon l'exemple 3 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

### Exemple 4 : comparatif

On prépare un matériau solide de formule (LiCl)ₓ.2Al(OH)₃,nH₂O avec n étant compris entre 0,01 et 1 et x = 1 selon un procédé de synthèse non conforme à l'invention en ce que l'étape de précipitation de boehmite est réalisée à pH = 10. L'étape c) de mise en contact est réalisée avec un ratio Li/Al = 0,5.

### 1/ précipitation de boehmite AIOOH

Dans un bêcher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 10. La température est maintenue à 20°C pendant toute la durée de l'étape de précipitation. Ce gâteau est mis en suspension dans un bécher de 3 L avec 320 mL d'eau.

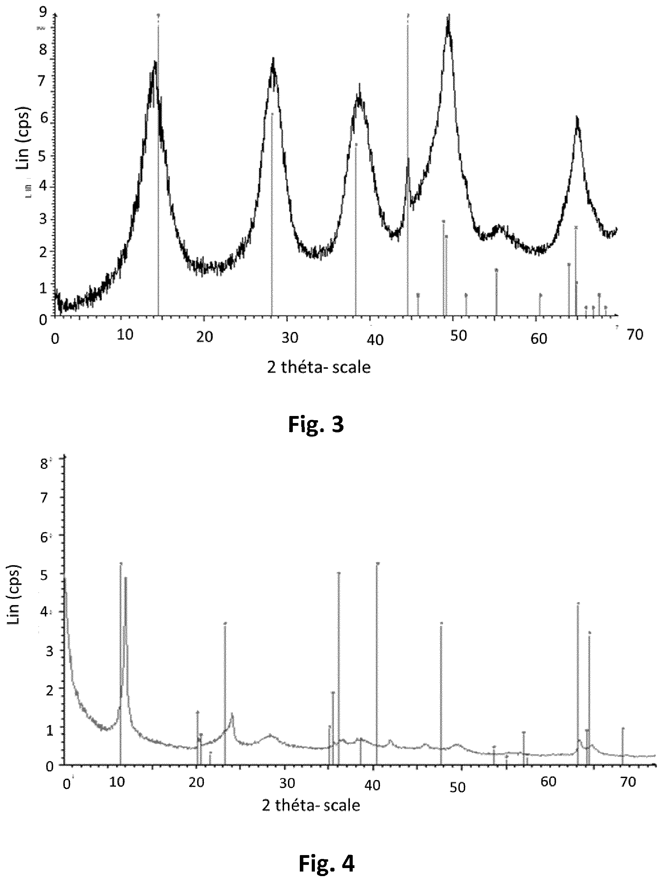

Un échantillon du précipité obtenu est prélevé du milieu réactionnel. La DRX (figure 3) du précipité montre que le précipité obtenu dans l'exemple 4 est bien un précipité de boehmite très bien cristallisé.

La taille des cristallites de la boehmite obtenue est mesurée selon la méthode de Sherrer : Taille selon [020] = 2,1 ± 2 (nm) ; Taille selon [120]=2,8 ± 3 (nm)

### 2/ Addition du chlorure de lithium LiCl.

On prépare une solution contenant 11,9 g de chlorure de lithium LiCl fourni par la société Prolabo ceci correspond à un ratio Li/Al de 0,5 et 1326 ml d'eau qui est additionnée au gâteau repulpé de l'étape 1/ précédente. Ce milieu réactionnel est agité et chauffé à 80°C pendant 2 h.

Une filtration puis un séchage en étuve à 80°C pendant 8h suivent les 2 premières étapes.

Le matériau solide ainsi préparé se caractérise par la formule (LiCl)ₓ.2Al(OH)₃,nH₂O avec n = 0,25 et x = 0,6 selon un procédé de synthèse conforme à l'invention. L'étape de mise en forme de la pâte obtenue est réalisée directement après l'étape de séchage, sans étape de malaxage préalable et en l'absence de liant. La pâte obtenue est mise en forme à l'aide d'une extrudeuse piston (MTS), équipée d'une filière cylindrique de 1 mm de diamètre.

Les extrudés sont préparés comme dans l'exemple 4 jusqu'à l'étape de séchage en étuve à 40°C pendant 12h.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

Des extrudés du matériau solide de formule (LiCl)ₓ.2Al(OH)₃,nH₂O avec n = 0,25 et x = 0,6 présentant une bonne cohésion et un aspect correcte sont obtenus. Une phase (LiCl)ₓ.2Al(OH)₃,nH₂O est détectée sur le diagramme de diffraction des rayons X des extrudés du matériau solide de formule (LiCl)ₓ.2Al(OH)₃,nH₂O avec n = 0,25 et x = 1 obtenu à l'exemple 1 (figure 4).

Les extrudés obtenus sont également caractérisés par les mesures suivantes :
L'analyse élémentaire montre une bonne stœchiométrie Li/Al/Cl correspondant à la composition d'une structure (LiCl)ₓ.2Al(OH)₃,nH₂O
Al= 24,8% masse ; Li= 1,9% masse ; Cl= 9,8 % masse.

Les extrudés obtenus présentent une surface spécifique : SBET = 3 m²/g.

Les extrudés obtenus selon l'exemple 4 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

### Exemple 5 : test de capacité d'adsorption et de cinétique d'adsorption.

La cinétique d'adsorption du lithium par les extrudés et leur capacité d'adsorption est testée par la réalisation d'une courbe de perçage dite aussi courbe de fuite ou courbe de saturation en colonne. Un courbe de saturation est réalisée pour chacun des extrudés solides obtenus dans les exemples 1 à 4 :
- 15 g de solides (extrudés) sont placés dans une colonne ;
- 10 volumes de colonne d'une solution saline de chlorure de lithium (LiCl) à 0,02 mol/L traverse la colonne en circuit fermé jusqu'à atteindre une concentration stable en lithium en solution ;
- Une solution naturelle contenant environ 0,06 mol/L de lithium traverse la colonne par passage ascendant, à un débit de 6 BV/h, c'est-à-dire six fois le volume occupé par le lit des extrudés en une heure ;
- La concentration en lithium est mesurée en sortie de la colonne en fonction du volume de solution passé.

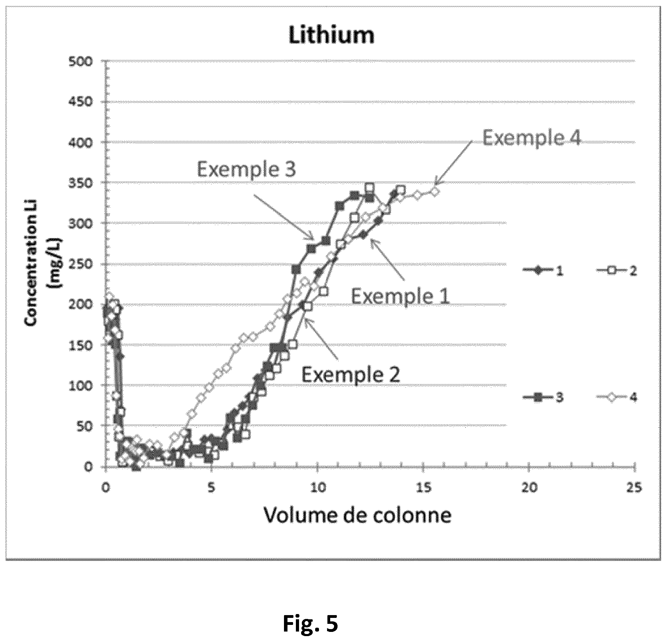

La figure 5 illustre les courbes de saturation obtenues pour chacun des extrudés obtenus dans les exemples 1 et 2 conformes à l'invention et 3 et 4 non conformes à l'invention.

Les résultats obtenus sont récapitulés dans le tableau 1.

**Tableau 1**

| Exemples | x | malaxage | pH fin précipitation | Li introduit (Li/Al) | Capacité mg(Li)/g(solide sec) |
|---|---|---|---|---|---|
| 1 | 0,6 | directe | 8 | 0,5 | 6,6 |
| 2 | 0,6 | basique | 8 | 0,5 | 6,6 |
| 3 | 1 | basique | 8 | 3,3 | 5,8 |
| 4 | 0,6 | basique | 10 | 0,5 | 4,3 |

Les extrudés obtenus selon les exemples 1 et 2 selon l'invention sont comparés à ceux obtenus dans les exemples 3 et 4 obtenus selon des procédés de préparation non-conformes à l'invention. Les extrudés des exemples 1 et 2 obtenus selon l'invention montrent une fuite en lithium arrivant à des volumes de saumure passés plus importants. Leur capacités d'adsorption en lithium sont respectivement 6,6 et 6,6 mg(Li)/g(solide sec), par rapport à 5,8 et 4,3 mg(Li)/g(solide sec) respectivement pour les solides obtenus selon les exemples 3 et 4 selon des procédés de préparation non-conformes à l'invention.

## Revendications

1. Procédé de préparation d'un matériau solide cristallisé de formule (LiCl)ₓ.2Al(OH)₃,nH₂O avec n étant compris entre 0,01 et 10, x étant compris entre 0,4 et 1, ledit procédé comprenant au moins les étapes suivantes :
a) une étape de précipitation de boehmite, en milieu aqueux, comprenant la mise en contact d'au moins un précurseur basique de préférence choisi parmi l'aluminate de sodium, l'aluminate de potassium, l'ammoniaque, l'hydroxyde de sodium, l'hydroxyde de potassium et l'un quelconque de leurs mélanges ; et d'au moins un précurseur acide, de préférence choisi parmi le chlorure d'aluminium, l'acide chlorhydrique et l'un quelconque de leurs mélanges, dans laquelle au moins l'un des précurseurs basique ou acide comprend de l'aluminium, pour obtenir une suspension de boehmite, ladite étape a) étant mise en œuvre à une température comprise entre 5 et 35°C, et la quantité du précurseur basique étant choisie de manière à obtenir un pH de fin de précipitation dans le milieu réactionnel compris entre 7,5 et 9,5,
b) une étape de lavage et de filtration du précipité de boehmite obtenu à l'étape a),
c) une étape de mise en contact du précipité obtenu à l'étape b) avec une quantité de chlorure de lithium équivalent à un ratio molaire Li/Al compris entre 0,3 et 1,2 de préférence pendant une durée comprise entre 10 minutes et 12 heures,
d) une étape de filtration de la suspension obtenue à l'étape c) pour obtenir une pâte,
e) une étape de séchage de la pâte obtenue à l'issue de l'étape d) à une température comprise entre 20 et 80°C de préférence pendant une durée comprise entre 1h et 12h,
f) une étape de mise en forme de ladite pâte séchée,
g) une étape de séchage du matériau mis en forme obtenu à l'issue de l'étape f) à une température comprise entre 20 et 200°C, de préférence pendant une durée comprise entre 1 et 20 heures.

2. Procédé selon la revendication 1, dans lequel le précurseur basique est l'hydroxyde de sodium (NaOH).

3. Procédé selon l'une quelconque des revendications 1 ou 2, dans lequel ladite étape a) de précipitation de la boehmite est mise en œuvre à une température comprise entre 10 et 25°C.

4. Procédé selon l'une quelconque des revendications 1 à 3, dans lequel la quantité du précurseur basique est choisie de manière à obtenir un pH de fin de précipitation de ladite étape a) dans le milieu réactionnel compris entre 7,7 et 8,8.

5. Procédé selon l'une quelconque des revendications 1 à 4, dans lequel ladite étape c) est mise en œuvre en présence d'une quantité de chlorure de lithium équivalent à un ratio molaire Li/Al compris entre 0,4 et 1.

6. Procédé selon la revendication 5, dans lequel ladite étape c) de mise en contact est mise en œuvre pendant une durée comprise entre 15 minutes et 5 heures.

7. Procédé selon l'une quelconque des revendications 1 à 6, dans lequel ladite étape f) de mise en forme est réalisée par extrusion.

8. Procédé selon la revendication 7, dans lequel ladite étape f) de mise en forme est mise en œuvre directement après l'étape e) de séchage.

9. Procédé selon la revendication 7, dans lequel ladite étape f) de mise en forme est mise en œuvre par malaxage - extrusion basique dans laquelle ladite pate séchée issue de l'étape e) est malaxée en présence d'une quantité de base comprise entre 0,5 et 3 % poids par rapport à la matière sèche, la matière sèche étant la masse de ladite pate issue de l'étape e), séchée de préférence en étuve à 200°C de préférence pendant 6h, ladite base étant choisie parmi les bases inorganiques et les bases organiques en solution, et dans laquelle ladite pâte est ensuite soumise à une étape d'extrusion.

10. Matériau solide cristallisé de formule (LiCl)ₓ.2Al(OH)₃,nH₂O avec n étant compris entre 0,01 et 10, x étant compris entre 0,4 et 1, mis en forme, de préférence sous forme d'extrudé, susceptible d'être obtenu selon un procédé tel que défini à l'une quelconque des revendications 1 à 9.

11. Procédé d'extraction du lithium de solutions salines, ledit procédé mettant en œuvre ledit matériau solide de de formule (LiCl)ₓ.2Al(OH)₃,nH₂O avec n étant compris entre 0,01 et 10, x étant compris entre 0,4 et 1, préparé selon le procédé tel que défini selon l'une des revendications 1 à 9, ou tel que défini selon la revendication 10, pour l'extraction de lithium de solutions salines.

12. Procédé d'extraction selon la revendication 11, dans lequel ledit procédé d'extraction du lithium comprend au moins les étapes suivantes :
- une étape d'activation dudit matériau solide cristallisé de formule (LiCl)ₓ.2Al(OH)₃,nH₂O,
- une étape de chargement dudit matériau activé par adsorption réalisée par passage de ladite solution saline sur ledit matériau activé,
- éventuellement au moins une étape de lavage de la solution saline imprégnant ledit matériau par passage d'une solution de lavage sur ledit matériau,
- une étape de désorption du lithium réalisée par passage d'eau ou d'une solution aqueuse de sel de lithium sur ledit matériau pour obtenir un éluat comprenant au moins du lithium.

13. Procédé d'extraction selon la revendication 12, dans lequel ladite étape d'activation est réalisée par le passage ascendant ou descendant d'eau ou d'une solution de chlorure de lithium (LiCl) ayant une concentration comprise entre 0,001 mol/L et 0,1 mol/L.

14. Procédé d'extraction selon la revendication 13, dans lequel ladite étape d'activation est réalisée à une température comprise entre 0°C et 90°C, et avec un temps de séjour de ladite solution de chlorure de lithium ou d'eau dans une colonne compris entre 0,03 et 10 h.

15. Procédé d'extraction selon l'une quelconque des revendications 12 à 14, dans lequel ladite étape de chargement est effectuée à une température comprise entre 0°C et 90°C, et de préférence avec un temps de séjour de ladite solution saline dans une colonne compris entre 0,03 et 10 h.

16. Procédé d'extraction selon l'une quelconque des revendications 12 à 15, dans lequel ladite solution de lavage utilisée dans l'étape de lavage est l'eau ou une solution aqueuse de chlorure de sodium (NaCl), comprenant éventuellement du chlorure de lithium (LiCl) .

17. Procédé d'extraction selon l'une quelconque des revendications 12 à 16, dans lequel ladite étape de lavage est réalisée à une température comprise entre 0°C et 90°C, et de préférence avec un temps de séjour de ladite solution de lavage dans une colonne compris entre 0,03 et 10 h.

18. Procédé d'extraction selon l'une quelconque des revendications 12 à 17, dans lequel ladite étape de désorption est réalisée par passage ascendant ou descendant, d'une solution de désorption choisi parmi l'eau et une solution de chlorure de lithium (LiCl) contenant de préférence 0,001 mol/L à 2 mol/L de LiCl.

19. Procédé d'extraction selon l'une quelconque des revendications 12 à 18, dans lequel ladite étape de désorption est réalisée à une température comprise entre 0°C et 90°C, et avec un temps de séjour de ladite solution de désorption dans une colonne compris entre 0,03 et 10 h.

20. Dispositif d'extraction de lithium **caractérisé en ce qu'**il comprend une unité comprenant au moins une colonne, ladite colonne comprenant au moins une garniture comprenant le matériau solide cristallisé préparé selon le procédé tel que défini selon l'une des revendications 1 à 9, ou tel que défini selon la revendication 10.

## Patentansprüche

1. Verfahren zum Herstellen eines kristallisierten, festen Materials der Formel (LiCl)ₓ.2Al(OH)₃,nH₂O mit n zwischen 0,01 und 10, x zwischen 0,4 und 1, wobei besagtes Verfahren wenigstens die folgenden Schritte aufweist:
a) einen Schritt des Ausfallens von Böhmit in wässrigem Milieu, welcher ein in-Kontakt-Bringen von wenigstens einem basischen Präkursor, der vorzugsweise ausgewählt ist aus Natriumaluminat, Kaliumaluminat, Ammoniak, Natriumhydroxid, Kaliumhydroxid und irgendeiner von deren Mischungen, und wenigstens einem sauren Präkursor, der vorzugsweise ausgewählt ist aus Ammoniumchlorid, Salzsäure und irgendeiner von deren Mischungen, wobei wenigstens einer der basischen oder sauren Präkursoren Aluminium aufweist, um eine Böhmit-Suspension zu erlangen, wobei besagter Schritt a) bei einer Temperatur zwischen 5 und 35 °C durchgeführt wird und die Menge des basischen Präkursors auf die Weise ausgewählt ist, dass ein End-pH des Ausfallens im Reaktionsmilieu zwischen 7,5 und 9,5 erlangt wird,
b) einen Schritt des Waschens und des Filterns des in Schritt a) erlangten Böhmit-Niederschlags,
c) einen Schritt des in-Kontakt-Bringens des in Schritt b) erlangten Niederschlags mit einer Menge Lithiumchlorid, die einem molaren Verhältnis Li/Al zwischen 0,3 und 1,2 entspricht, vorzugsweise für einen Zeitraum zwischen 10 Minuten und 12 Stunden,
d) einen Schritt des Filtrierens der in Schritt c) erlangten Suspension zum Erlangen einer Paste,
e) einen Schritt des Trocknens der als Ergebnis des Schritts d) erlangten Paste bei einer Temperatur zwischen 20 und 80 °C, vorzugsweise für einen Zeitraum zwischen 1h und 12h,
f) einen Schritt des in-Form-Bringens der besagten getrockneten Paste,
g) einen Schritt des Trocknens des in Form gebrachten Materials, das als Ergebnis des Schritts f) erlangt wurde, bei einer Temperatur zwischen 20 und 200 °C, vorzugsweise für einen Zeitraum zwischen 1 und 20 Stunden.

2. Verfahren gemäß Anspruch 1, wobei der basische Präkursor Natriumhydroxid (NaOH) ist.

3. Verfahren gemäß Anspruch 1 oder 2, wobei besagter Schritt a) des Ausfallens des Böhmits bei einer Temperatur zwischen 10 und 25 °C durchgeführt wird.

4. Verfahren gemäß irgendeinem der Ansprüche 1 bis 3, wobei die Menge des basischen Präkursors auf die Weise ausgewählt ist, dass ein End-pH des Ausfallens des besagten Schritts a) im Reaktionsmilieu zwischen 7,7 und 8,8 erlangt wird.

5. Verfahren gemäß irgendeinem der Ansprüche 1 bis 4, wobei besagter Schritt c) in Anwesenheit einer Menge Lithiumchlorid durchgeführt wird, die einem molaren Verhältnis Li/Al zwischen 0,4 und 1 entspricht.

6. Verfahren gemäß Anspruch 5, wobei besagter Schritt c) des in-Kontakt-Bringens für einen Zeitraum zwischen 15 Minuten und 5 Stunden durchgeführt wird.

7. Verfahren gemäß irgendeinem der Ansprüche 1 bis 6, wobei besagter Schritt f) des in-Form-Bringens mittels Extrusion realisiert ist.

8. Verfahren gemäß Anspruch 7, wobei besagter Schritt f) des in-Form-Bringens direkt nach Schritt e) des Trocknens durchgeführt wird.

9. Verfahren gemäß Anspruch 7, wobei besagter Schritt f) des in-Form-Bringens mittels basischen Knetextrudierens durchgeführt wird, wobei besagte aus Schritt e) stammende getrocknete Paste geknetet wird in Anwesenheit einer Menge Base zwischen 0,5 und 3 Gew.-% bezogen auf die Trockenmasse, wobei die Trockenmasse die Masse der besagten aus Schritt e) stammenden Paste ist, die vorzugsweise in einer Wärmekammer bei 200 °C, vorzugsweise für 6h getrocknet wurde, wobei besagte Base ausgewählt ist aus den anorganischen Basen und den organischen Basen in Lösung und wobei besagte Paste anschließend einem Schritt der Extrusion unterzogen wird.

10. Kristallisiertes, festes Material der Formel (LiCl)ₓ.2Al(OH)₃,nH₂O mit n zwischen 0,01 und 10, x zwischen 0,4 und 1, in Form gebracht vorzugsweise in extrudierter Form, welches geeignet ist, um gemäß einem Verfahren, wie in irgendeinem der Ansprüche 1 bis 9 definiert, erlangt zu sein.

11. Extraktionsverfahren von Lithium aus Salzlösungen, wobei besagtes Verfahren besagtes festes Material der Formel (LiCl)ₓ.2Al(OH)₃,nH₂O realisiert mit n zwischen 0,01 und 10, x zwischen 0,4 und 1, welches gemäß dem Verfahren, wie gemäß einem der Ansprüche 1 bis 9 definiert, bereitgestellt ist, oder wie es gemäß Anspruch 10 definiert ist, zur Extraktion des Lithiums aus Salzlösungen.

12. Extraktionsverfahren gemäß Anspruch 11, wobei besagtes Extraktionsverfahren des Lithiums wenigstens die folgenden Schritte aufweist:
- einen Schritt des Aktivierens des besagten kristallisierten, festen Materials der Formel (LiCl)ₓ.2Al(OH)₃,nH₂O,
- einen Schritt des Ladens des besagten aktivierten Materials mittels Adsorption, die mittels Passierens der besagten Salzlösung über besagtes aktiviertes Material realisiert ist,
- eventuell wenigstens einen Schritt des Waschens der Salzlösung, welche besagtes Material mittels Passierens einer Waschlösung über besagtes Material imprägniert,
- einen Schritt des Desorbierens des Lithiums, welcher mittels Passierens von Wasser oder einer wässrigen Lithiumsalzlösung über besagtes Material realisiert wird, um ein Eluat zu erlangen, dass wenigstens Lithium aufweist.

13. Extraktionsverfahren gemäß Anspruch 12, wobei besagter Schritt des Aktivierens mittels ansteigenden oder abfallenden Passierens von Wasser oder einer Lithiumchlorid-Lösung (LiCI) mit einer Konzentration zwischen 0,001 mol/L und 0,1 mol/L realisiert wird.

14. Extraktionsverfahren gemäß Anspruch 13, wobei besagter Schritt des Aktivierens bei einer Temperatur zwischen 0 °C und 90 °C und mit einer Aufenthaltsdauer der besagten Lithiumchlorid-Lösung oder des Wassers in einer Säule zwischen 0,03 und 10 h realisiert wird.

15. Extraktionsverfahren gemäß irgendeinem der Ansprüche 12 bis 14, wobei besagter Schritt des Ladens bei einer Temperatur zwischen 0 °C und 90 °C und vorzugsweise mit einer Verweildauer der besagten Salzlösung in einer Säule zwischen 0,03 und 10 h durchgeführt wird.

16. Extraktionsverfahren gemäß irgendeinem der Ansprüche 12 bis 15, wobei besagte Waschlösung, die im Schritt des Waschens verwendet wird, Wasser oder eine wässrige Natriumchlorid-Lösung (NaCl) ist, die eventuell Lithiumchlorid (LiCI) aufweist.

17. Extraktionsverfahren gemäß irgendeinem der Ansprüche 12 bis 16, wobei besagter Schritt des Waschens bei einer Temperatur zwischen 0 °C und 90 °C und vorzugsweise mit einer Verweildauer der besagten Waschlösung in einer Säule zwischen 0,03 und 10 h realisiert wird.

18. Extraktionsverfahren gemäß irgendeinem der Ansprüche 12 bis 17, wobei besagter Schritt des Desorbierens mittels ansteigenden oder abfallenden Passierens einer Desorptionslösung realisiert wird, welche ausgewählt ist aus Wasser und einer Lithiumchlorid-Lösung (LiCI), welche vorzugsweise 0,001 mol/L bis 2 mol/L LiCI enthält.

19. Extraktionsverfahren gemäß irgendeinem der Ansprüche 12 bis 18, wobei besagter Schritt des Desorbierens bei einer Temperatur zwischen 0 °C und 90 °C und mit einer Verweildauer der besagten Desorptionslösung in einer Säule zwischen 0,03 und 10 h realisiert wird.

20. Lithium-Extraktionsvorrichtung, **dadurch gekennzeichnet, dass** sie eine Einheit aufweist, die wenigstens eine Säule aufweist, wobei besagte Säule wenigstens ein Füllmaterial aufweist, welches das kristallisierte, feste Material aufweist, das gemäß dem Verfahren, wie gemäß irgendeinem der Ansprüche 1 bis 9 definiert, bereitgestellt ist oder wie es in Anspruch 10 definiert ist.

## Claims

1. Process for preparing a solid crystalline material of formula (LiCl)ₓ.2Al(OH)₃,nH₂O with n being between 0.01 and 10, x being between 0.4 and 1, said process comprising at least the following steps :
a) a step to precipitate boehmite, in an aqueous medium, comprising the contacting of at least one base precursor preferably selected from among sodium aluminate, potassium aluminate, ammonia, sodium hydroxide, potassium hydroxide and any of the mixtures thereof; with at least one acid precursor preferably selected from among aluminium chloride, hydrochloric acid and any of the mixtures thereof, wherein at least one of the base or acid precursors comprises aluminium, to obtain a suspension of boehmite, said step a) being conducted at a temperature of between 5 and 35°C, and the amount of base precursor being selected so as to obtain an end-precipitation pH in the reaction medium of between 7.5 and 9.5;
b) a step to wash and filter the precipitate of boehmite obtained at step a);
c) a step to place the precipitate obtained at step b) in contact with a quantity of lithium chloride equivalent to a Li/AI molar ratio of between 0.3 and 1.2, preferably for a time of between 10 minutes and 12 hours;
d) a step to filter the suspension obtained at step c) to obtain a paste;
e) a step to dry the paste obtained after step d) at a temperature of between 20 and 80°C preferably for a time of between 1 h and 12 h;
f) a step to form said dried paste;
g) a step to dry the formed material obtained after step f) at a temperature of between 20 and 200°C, preferably for a time of between 1 and 20 hours.

2. The process according to claim 1, wherein the base precursor is sodium hydroxide (NaOH).

3. The process according to any of claims 1 or 2, wherein said step a) to precipitate boehmite is conducted at a temperature of between 10 and 25°C.

4. The process according to any of claims 1 to 3, wherein the amount of base precursor is selected so as to obtain an end-precipitation pH in the reaction medium of between 7.7 and 8.8.

5. The process according to any of claims 1 to 4, wherein said step c) is performed in the presence of a quantity of lithium chloride equivalent to a Li/AI molar ratio of between 0.4 and 1.

6. The process according to claim 5, wherein said contacting step c) is conducted for a time of between 15 minutes and 5 hours.

7. The process according to any of claims 1 to 6, wherein said forming step f) is implemented via extrusion.

8. The process according to claim 7, where said forming step f) is implemented directly after the drying step e).

9. The process according to claim 7, wherein said forming step f) is implemented via base knead-extrusion wherein said dried paste derived after step e) is kneaded in the presence of an amount of base of between 0.5 and 3 weight % relative to the dry matter, the dry matter being the weight of said paste derived from step e) preferably dried in an oven at 200°C preferably for 6h, said base being selected from among inorganic bases and organic bases in solution, and wherein said paste is then subjected to an extrusion step.

10. Solid crystalline material of formula (LiCl)ₓ.2Al(OH)₃,nH₂O with n being between 0.01 and 10, x being between 0.4 and 1, formed preferably in extrudate form, able to be obtained with a process such as defined in any of claims 1 to 9.

11. Process for extracting lithium from saline solutions, said process using said solid material of formula (LiCl)ₓ.2Al(OH)₃,nH₂O with n being between 0.01 and 10, x being between 0.4 and 1, prepared according to the process such as defined in any of claims 1 to 9, or such as defined in claim 10, for the extraction of lithium from saline solutions.

12. The extraction process according to claim 11, wherein said lithium extraction process comprises at least the following steps:
- a step to activate said solid crystalline material of formula (LiCl)ₓ.2Al(OH)₃,nH₂O;
- a step to load said activated material via adsorption performed by passing said saline solution over said activated material;
- optionally at least one step to wash the saline solution impregnating said material by passing a wash solution over said material;
- a lithium desorption step performed by passing water or an aqueous solution of lithium salt over said material to obtain an eluate at least containing lithium.

13. The extraction process according to claim 12, wherein said activation step is performed by upflow or downflow passing of water or a solution of lithium chloride (LiCI) having a concentration of between 0.001 mol/L and 0.1 mol/L.

14. The extraction process according to claim 13, wherein said activation step is conducted at a temperature of between 0°C and 90°C, with a residence time of said lithium chloride solution or water in the column of between 0.03 and 10 h.

15. The extraction process according to any of claims 12 to 14, wherein said loading step is conducted at a temperature of between 0°C and 90°C, and preferably with a residence time of said saline solution in a column of between 0.03 and 10 h.

16. The extraction process according to any of claims 12 to 15, wherein said wash solution used at the wash step is water or an aqueous solution of sodium chloride (NaCI), optionally containing lithium chloride (LiCI).

17. The extraction process according to any of claims 12 to 16, wherein said wash step is conducted at a temperature of between 0°C and 90°C, and preferably with a residence time of said wash solution in a column of between 0.03 and 10 h.

18. The extraction process according to any of claims 12 to 17, wherein said desorption step is performed by upflow or downflow passing of a desorption solution selected from among water and a lithium chloride solution (LiCI) preferably containing 0.001 mol/L to 2 mol/L LiCI.

19. The extraction process according to any of claims 12 to 18, wherein said desorption step is conducted a temperature of between 0°C and 90°C, with a residence time of said desorption solution in a column of between 0.03 and 10 h.

20. Lithium extraction device, **characterized in that** it comprises a unit comprising at least one column, said column comprising at least one packing comprising the solid crystalline material prepared in accordance with the process such as defined in one of claims 1 to 9, or such as defined in claim 10.
